# EUROPÄISCHE PATENTSCHRIFT

(11) **EP 3 289 291 B1**
(45) Veröffentlichungstag und Bekanntmachung des Hinweises auf die Patenterteilung: **16.08.2023**
(21) Anmeldenummer: 16723926.8
(22) Anmeldetag: 26.04.2016
(51) Int. Cl.: F24T 10/20

(54) **VERFAHREN ZUR NUTZUNG DER INNEREN ENERGIE EINES AQUIFERFLUIDS IN EINER GEOTHERMIEANLAGE**
METHOD FOR UTILIZING THE INNER ENERGY OF AN AQUIFER FLUID IN A GEOTHERMAL PLANT
PROCÉDÉ D'UTILISATION DE L'ÉNERGIE INTERNE D'UN FLUIDE AQUIFÈRE DANS UNE INSTALLATION GÉOTHERMIQUE

(30) Priorität: 27.04.2015 CH 5802015
(43) Veröffentlichungstag der Anmeldung: 07.03.2018
(73) Patentinhaber: von Düring Management AG, 6004 Luzern (CH)
(72) Erfinder: VON DÜRING, Bodo, 6004 Luzern (CH)
(74) Vertreter: Grimm, Siegfried
(86) Internationale Anmeldenummer: PCT/CH2016/000072
(87) Internationale Veröffentlichungsnummer: WO 2016/172807

(56) Entgegenhaltungen:
- WO-A1-2014/015307
- US-A- 4 522 728
- US-A- 5 582 011
- US-A- 5 970 714
- US-A1- 2010 043 433
- US-A1- 2011 272 166
- US-A1- 2014 123 624
- US-A1- 2014 130 498
- BASIC ET AL.: "Improved utilization of low temp thermal water rich in hydrocarbon gases", GHC BULLETIN, 1990, XP002761787, in der Anmeldung erwähnt

## Beschreibung

### Gebiet der Erfindung

Die vorliegende Erfindung beschreibt ein Verfahren zur Nutzung der inneren Energie einer wässrigen, Gas enthaltenden Lösung aus bestehenden und neuen Erdöl und/oder Erdgasquellen. Solche Lagerstätten umfassen unter anderem Aquifere, aber auch teilweise mit konventionellen Verfahren der Erdöl- bzw. Erdgasförderung ausgebeutete und durch Einpressen von Wasser, insbesondere Salzwasser, stabilisierte Erdöl bzw. Erdgaslager. Der Einfachheit halber werden im Rahmen der Beschreibung der vorliegenden Erfindung alle diese Lagerstätten als Aquifere und alle aus einem Aquifer entnommenen Flüssigkeiten als Aquiferfluide bezeichnet. Ein Aquiferfluid gemäss der vorliegenden Erfindung ist mit Gas und gegebenenfalls Erdöl gemischtes, mittels Geothermie aufgeheiztes, mehr oder weniger salz- bzw. mineralhaltiges Wasser (in der Folge als geothermisches Wasser oder geothermisches Thermalwasser oder Thermalwasser bezeichnet). Das erfindungsgemässe Verfahren nutzt die innere Energie eines Aquiferfluids in einem geschlossenen Kreislauf. Weitere Gegenstände der Erfindung sind eine hybride Geothermieanlage zur Nutzung der inneren Energie von mit Gas und gegebenenfalls Erdöl gemischtem geothermischem Wasser aus einem Aquifer in einem geschlossenen Kreislauf, sowie ein Umrüstungsverfahren für eine bestehende Geothermieanlage, zur verbesserten energetischen Nutzung eines Aquiferfluids.

### Hintergrund

Schon seit langer Zeit wird die thermische Energie von geothermischem Thermalwasser oder Thermalsole aus Aquiferen genutzt. Als Aquifere bekannte Grundwasserleiter sind in verschiedenen Tiefen in der Erdkruste in unterschiedlichen geologischen Formationen vorhanden. Aquifere weisen neben Thermalwasser oft auch Gasvorkommen auf. Aufgrund des grossen Druckes in diesen Tiefen ist das Gas gelöst im Thermalwasser, wobei eine solche Lösung hier Aquiferfluid genannt wird. Die im Thermalwasser gelösten Gase sind in der Regel Brenngase, deren energetische oder chemische Nutzung allein nicht wirtschaftlich ist. Die im Thermalwasser gelösten Gase umfassen Methan oder andere gasförmige Kohlenwasserstoffe, Wasserstoff und/oder Kohlenmonoxid, sowie andere nicht brennbare Komponenten, beispielsweise Wasserdampf und/oder Kohlendioxid. Bei der Förderung des Aquiferfluids dehnt sich das gelöste Gas aus, wird aus der Lösung vertrieben und muss - sofern es nicht einer Nutzung zugeführt wird - unter Emission klimarelevanter Gase abgeblasen oder abgefackelt werden.

Durch die heutige Bohrtechnik können Zugänge zu tief liegenden Aquiferen erstellt werden, sodass Aquiferfluid mit Anfangstemperaturen von über 60°C aus Tiefen von bis zu einigen Kilometern gewonnen werden kann. Neben der Verwendung zum Heizen von Gebäuden wird das Thermalwasser auch zur Erzeugung von elektrischem Strom verwendet. Nach der energetischen Nutzung des Thermalwassers wird das abgekühlte Thermalwasser mittels einer Rückführvorrichtung wieder zurück in den Aquifer geführt.

Wie beispielsweise aus "Improved utilization of low temp thermal water rich in hydrocarbon gases" von Bašić et al., GHC Bulletin, Summer 1990, hervorgeht, wurde Aquiferfluid, welches Thermalwasser mit darin gelöstem Methan umfasst, in der Vergangenheit vor der Nutzung der thermischen Energie vorbehandelt. Dabei wurde das Methan aus dem Aquiferfluid mit einer Gasseparationsvorrichtung separiert. Das Thermalwasser wurde energetisch in einer Einrichtung zur Nutzung der thermischen Energie genutzt und die Energie des separierten Methans wurde in einem anschliessenden Verbrennungsprozess zugänglich gemacht. Dieser Verbrennungsprozess umfasst einerseits die Verbrennung des separierten Methans in einem Gasmotor zur Stromproduktion in einem angeschlossenen Generator, andererseits die Nutzung der durch direkte Verbrennung des Methans gewonnene Wärmeenergie zum weiteren Aufheizen des gewonnenen Thermalwassers. Nach der energetischen Nutzung des Thermalwassers und des Methans, wird das abgekühlte Thermalwasser wieder in den Aquifer injiziert, wobei die für das Einpressen notwendige Energie mittels Methanverbrennung gewonnen wird. Durch dieses Verfahren wird der Energieinhalt des Aquiferfluids gut aber nicht optimal genutzt.

Ein weiteres Verfahren zur Nutzung eines Aquifers ist bekannt aus US 2011/0272166 A1. In diesem Verfahren wird zur besseren Förderung des Aquiferfluids im Kreislauf geführtes flüssiges CO₂ in den Aquifer eingeleitet. Das CO₂ wird im Aquiferfluid gelöst und mit diesem wieder entnommen. Das CO₂ soll neben der Entnahme auch das Auftrennen in Methan und Thermalwasser fördern. Das Methan wird in eine Leitung zur Nutzung an einem anderen Ort eingeleitet. Das Thermalwasser wird zum Betrieb einer ORC-Anlage genutzt.

Bei der Verbrennung des Methans gemäss Bašić et al. sowie US 2011/0272166 A1 entstehen Abgase, sodass diese an sich umweltfreundliche Nutzung der inneren Energie des Aquiferfluids, ebenso wie das Abfackeln, zu einer Belastung der Umwelt aufgrund der abgegebenen Verbrennungsabgase führt.

Auch US2014/0130498 beschreibt die Verwendung von CO2 als "Arbeitsfluid", mit dem Methan aus dem Aquiferfluid ausgetrieben wird.

Heute sind zudem bereits viele Erdölfelder weitgehend ausgebeutet und die noch vorhandenen Erdölmengen lassen sich nur mit zunehmendem Aufwand fördern, was ein (kosten)günstiges Förderverfahren wünschenswert macht. Diese Erdölfelder sind weitgehend mit Wasser gefüllt, so dass sich diese als Aquifere im Sinne der vorliegenden Erfindung eignen.

Aber nicht nur stark ausgebeutet, auch relativ neu erschlossene Erdölfelder sind aufgrund der Fördertechnik mittels Wassereinspritzung geeignete Aquifere.

### Darstellung der Erfindung

Die vorliegende Erfindung hat sich zur Aufgabe gestellt die energetische Nutzung der inneren Energie von mit Gas und gegebenenfalls Erdöl gemischtem geothermischem Thermalwasser in einem geschlossenen Kreislauf zu optimieren, wobei eine umweltneutrale und kohlendioxidfreie Nutzung des Aquiferfluids und eine umweltfreundliche Versorgung mit elektrischer und thermischer Energie erreicht werden soll. Unter geschlossenem Kreislauf wird im Rahmen dieser Erfindung ein Verfahren verstanden, bei dem praktisch keine Emissionen entstehen, wobei allerdings Gas und gegebenenfalls Erdöl entnommen (und anderweitig verwendet werden kann) und CO₂ (gegebenenfalls auch aus anderen anthropogenen Quellen) zurückgeführt wird.

In der Folge wird, soweit Erdgas und Erdöl gemeinsam angesprochen sind, oder wo es keinen Unterschied macht ob es sich um Erdgas oder um Erdöl handelt, auch der Begriff Kohlenwasserstoffe verwendet.

Das Verfahren zur Nutzung der inneren Energie eines Aquiferfluids, welches mit brennbarem Gas (in der Folge auch nur als Gas bezeichnet) und gegebenenfalls Erdöl gemischtes geothermisches Thermalwasser umfasst, in einem geschlossenen Kreislauf gemäss Anspruch 1, ist u.a. gekennzeichnet durch die Schritte
- Entnahme des Aquiferfluids aus einem Aquifer mittels mehrerer Entnahmevorrichtungen und durch mehr als eine Entnahmebohrung, wobei jede Entnahmebohrung über eine Entnahmevorrichtung im Bereich der Entnahmebohrung verfügt, mittels derer das Aquiferfluid (A) entnommen wird, und wobei jede Entnahmevorrichtung eine Entnahmepumpe umfasst,
- Separation des Gases durch Entgasung des Aquiferfluids in einer Gasseparationsvorrichtung, wobei entgastes Thermalwasser resultiert,
- gegebenenfalls Separation von Erdöl in einer Ölseparationsvorrichtung, wobei entgastes und ölfreies Thermalwasser resultiert,
- Nutzung der Wärmeenergie des entgasten Thermalwassers in mindestens einem Wärmetauscher zur Erwärmung mindestens eines im Kreislauf geführten Heizmediums oder zur Entsalzung von salzhaltigem Wasser, wie Meerwasser, sowie
- Durchführung mindestens eines Verbrennungsprozesses der separierten Kohlenwasserstoffe in mindestens einer Verbrennungsvorrichtung und Nutzung der inneren Energie der Kohlenwasserstoffe durch den Betrieb mindestens eines Generators,
- Entfernung unerwünschter Stoffe aus dem Abgas des Verbrennungsprozesses mittels einer Abgasreinigungsvorrichtung umfassend eine Aminwäscheanlage zur Abtrennung von CO₂ aus den abgekühlte Abgasen, und
- Reinjektion des CO₂ und des abgekühlten Thermalwassers in den Aquifer.

Die Reinjektion von CO₂ und Thermalwasser kann entweder getrennt (nach Versetzen des CO₂ in den superkritischen Zustand) bis in eine Tiefe, in der der Druck jenem des scCO₂ entspricht, oder nach Einleitung des CO₂ ins abgekühlte Thermalwasser erfolgen.

Je nach Separator kann die Separation von Gas und Erdöl auch im gleichen Separator erfolgen, wobei derzeit zwei getrennte Separatoren bevorzugt sind.

Bei Aquiferen, die unter sehr hohem Druck stehen, ist es sinnvoll oder notwendig, das Aquiferfluid vor dessen Einleitung in den mindestens einen Separator soweit zu entspannen, dass dieses nur noch den im Kreislauf vorgesehenen Überdruck aufweist. Dies kann beispielsweise dadurch erfolgen, dass das Aquiferfluid vor dem Separator über eine Vorrichtung zur Stromerzeugung geleitet wird. Dafür geeignete Vorrichtungen sind mit einem Generator gekoppelte Turbinen oder rückwärtslaufende Kompressoren.

Bei Aquiferen, die im Aquiferfluid sowohl Erdgas, wie auch Erdöl enthalten, kann das Erdöl aus der Anlage entfernt und einer anderweitigen Nutzung zugeführt werden oder - was vor allem bei geringen Erdölmengen sinnvoller sein kann - direkt innerhalb der Anlage verbrannt und analog dem Gas genutzt werden.

Die Abgasreinigung erfolgt indem der Verbrennungsvorrichtung eine Mischvorrichtung zum Mischen von Gas und gegebenenfalls Erdöl mit Verbrennungsluft vorgeschaltet wird, wobei das Mischverhältnis in der Mischvorrichtung mittels im Abgasstrom angeordneter Lambdasonden gesteuert wird, und durch Vorheizen der Gas-(Öl)-Luft-Mischung vor deren Einspeisung in die Verbrennungsvorrichtung. Zusätzlich wird die Zusammensetzung des Abgases mittels einer der Verbrennungsvorrichtung nach- und der Gaswäscheanlage vorgeschalteten Abgasreinigungsvorrichtung, insbesondere einem Katalysator.

Bei Nutzung von sowohl Gas als auch Öl ist es ebenfalls möglich und - je nach Zusammensetzung des Öls allenfalls bevorzugt - Gas und Öl in getrennten Verbrennungsvorrichtungen zu verbrennen. Dies kann z.B. dann angezeigt sein, wenn der Ölverbrennung eine andere (katalytische) Abgasreinigung nachgeschaltet werden sollte als der Gasverbrennung.

Zusätzlich kann auch eine Erdölreinigung der Verbrennung vorgeschaltet sein, so dass allenfalls die Abgasreinigung oder die Verbrennung störende Stoffe, wie Schwermetalle, Schwefelverbindungen etc. vor der Verbrennung entfernt werden und sich somit nicht in der Verbrennungsvorrichtung ablagern oder in den Abgasstrom gelangen. Solche Verfahren sind dem Fachmann aus der Erdölindustrie bekannt.

Durch das vorliegende Verfahren wird eine abgasfreie elektrische und thermische Nutzung von lokal verfügbaren fossilen Vorkommen von Aquiferfluiden erreicht.

Ein weiterer Gegenstand der vorliegenden Erfindung ist eine Geothermieanlage zur Nutzung der inneren Energie von mit brennbaren Gasen und gegebenenfalls Erdöl gemischtem geothermischem Thermalwasser aus einem Aquifer in einem geschlossenen Kreislauf gemäss Anspruch 7. Diese umfasst u.a. mehrere Entnahmebohrungen, wobei jede Entnahmebohrung über eine Entnahmevorrichtung für Aquiferfluid im Bereich der jeweiligen Entnahmebohrung verfügt zur Entnahme des Aquiferfluids, und wobei jede Entnahmevorrichtung eine Entnahmepumpe umfasst. Weiterhin umfasst die Geothermieanlage eine Gas- und gegebenenfalls eine Ölseparationsvorrichtung zur Auftrennung des Aquiferfluids in Thermalwasser, Gas und gegebenenfalls Erdöl, mindestens einen Wärmetauscher zur Nutzung der im Thermalwasser enthaltenen thermischen Energie zur Erwärmung von im Kreislauf geführtem Heizmedium oder im Rahmen einer Entsalzungsanlage, eine Verbrennungsvorrichtung für separiertes Gas und gegebenenfalls eine Verbrennungsvorrichtung für Öl mit mindestens je einem daran gekoppelten Generator zur Erzeugung von elektrischem Strom, einen im Abgasstrom nach den Vorrichtungen zu dessen thermischer Nutzung angeordneten Aminwäscher zur Abtrennung des CO₂, entweder eine Zuleitung für das nach Gaswäsche erhaltene CO₂ in eine Rückführleitung für das aus dem mindestens einen Wärmetauscher ausgetretene Thermalwasser oder eine Leitung direkt in mindestens eine Rückführvorrichtung zur Reinjektion des Kohlendioxids und des abgekühlten Thermalwassers durch eine Reinjektionsbohrung in den Aquifer.

Die Reinjektion des CO₂ kann auf zwei verschiedene Arten erfolgen:
Wenn das Thermalwasser ausreichend abgekühlt ist, d.h. unter 35°C oder tiefer, wird das CO₂ verdichtet und in die Rückführleitung für das aus dem mindestens einen Wärmetauscher ausgetretene Thermalwasser eingepresst und mit diesem zusammen über die Rückführvorrichtung in den Aquifer reinjiziert. Dieses Verfahren ist speziell geeignet, wenn die thermische Energie des Thermalwassers sehr intensiv genutzt wird, d.h. das Thermalwasser bis unter 35°C und speziell bevorzugt bis auf etwa 27°C oder tiefer abgekühlt wird.

Bei weniger intensiver Nutzung des Thermalwassers, d.h. bei Temperaturen von mindestens 35°C, wird das CO₂ bis in den superkritischen/überkritischen Zustand verdichtet (scCO2) und getrennt vom Thermalwasser in den Aquifer zurückgeleitet. Diese Zurückleitung bzw. Reinjektion erfolgt über eine Reinjektionsbohrung bis in Tiefen, in denen der Druck im Aquifer etwa dem Druck des scCO₂ entspricht (üblicherweise mind. 73 bar). Dies kann mittels eines Wellhead geschehen, der zusätzlich zu einer Reinjektionsleitung für das Thermalwasser eine Leitung für das scCO₂ aufweist. Eine solche Leitung für scCO₂ kann ein in der Reinjektionsleitung z.B. konzentrisch angeordnetes Rohr sein, insbesondere ein Rohr aus Chrom oder einer Chromlegierung. Nach dem Lösen des scCO₂ im Thermalwasser kann die Lösung noch tiefer in den Aquifer geleitet werden, z.B. bis auf Tiefen von 2000 bis 2500 m.

Die hybride Geothermieanlage umfasst ferner mindestens eine der mindestens einen Verbrennungsvorrichtung vorgeschaltete Mischvorrichtung zum Mischen des Gases und gegebenenfalls des Erdöls mit Verbrennungsluft und eine der Verbrennungsvorrichtung nachgeschaltete Abluftreinigungsvorrichtung, wie einen Katalysator.

Die Geothermieanlage umfasst zudem mindestens einen im Abgasstrom angeordneten und der Abgasreinigungsvorrichtung nachgeschalteten Wärmetauscher.

In einer bevorzugten Ausführungsform erfolgt die allfällige Vermischung des CO₂ mit dem abgekühlten Thermalwasser in einem Rieselwäscher, insbesondere einem mit Füllkörpern zumindest teilweise gefüllten Rieselwäscher, in dem das Gas unter dem erwünscht hohen Druck vorliegt und mit Wasser "berieselt" wird, bis es mit CO₂ gesättigt ist.

Das Abgas, das in der Aufbereitungsanlage mittels Aminwäsche aufbereitet wird, zeichnet sich üblicherweise durch zwei für die CO₂-Abtrennung wesentliche Eigenschaften aus; einen relativ hohen Volumenstrom und einen relativ niedrigen CO₂-Gehalt. Daraus folgt, dass für die Absorption des CO₂ eine sehr große, aktive Oberfläche für die Reaktion zwischen Abgas und Amin benötigt wird.

Die aktive Fläche ist der Bereich, in dem das Abgas und die Aminwaschlösung den Massenaustausch vollziehen, d.h. in dem das CO₂ chemisch durch die Waschlösung absorbiert wird. Diese aktive Oberfläche umfasst vorzugsweise mehr als einen, z.B. zwei, strukturierte Packungsabschnitte, die je mit den zugehörigen Fluidsammlern und Verteilern ausgestattet sind. Sammlung und Neuverteilung gewährleisten eine gleichmässigere Konzentration der Waschlösung in allen Bereichen der strukturierten Packung.

Ein weiterer zu berücksichtigender Aspekt ist, dass die Aminwaschlösung eine definierte Reaktionsgeschwindigkeit aufweist. Dies erfordert eine genau definierte, ausreichend lange Reaktionsstrecke, die unter Berücksichtigung von Temperatur und Druck festzulegen ist. Bei einer Temperatur der Aminwaschlösung von beispielsweise ca. 35 °C und einem geringen Überdruck von beispielsweise ca. 16 bar beträgt die bevorzugte Höhe der Kolonne ca. 30 Meter. Um gute Absorption zu gewährleisten, wird das Abgas im Gegenstrom zur Waschlösung geführt. Dem Abgas und der Waschlösung muss ausreichen Zeit und Platz für die Reaktion zur Verfügung stehen, was durch die Kolonnenhöhe und die aktive Oberfläche sichergestellt wird. Damit der geforderte CO₂-Gehalt von unter 1 Vol.-% CO₂ und ein hoher Absorptionswirkungsgrad in dem behandelten Abgas erreicht werden kann, ist es notwendig, die oben beschriebenen Parameter zu optimieren und genau einzuhalten.

Eine geeignete Waschkolonne weist die folgenden Komponenten auf:
- Kolonnensumpf, für die Sammlung der CO₂-angereicherten Waschlösung, die aus dem Sumpf abgezogen und der Ammoniumcarbonat-Spaltung zugeführt wird,
- Flüssigkeitseintritte,
- Absorptions- bzw. Waschabschnitte mit strukturierter Packung,
- Flüssigkeitssammler und Verteiler zwischen den Waschabschnitten,
- Tropfenabscheider (Demister)
- verschiedene Anschlüsse für Rohrleitungen und Messtechnik, sowie vorzugsweise
- Wartungsöffnungen (Mannlöcher).

Für eine zwei Absorptionsabschnitte aufweisende Waschkolonne ergibt sich deshalb bei den oben angegebenen Parametern eine minimale Bauhöhe von 30m.

Um den Aminaustrag im COg-abgereicherten Gas am Austritt der Waschkolonnen zur reduzieren, ist vorzugsweise zusätzlich ein Nachwäscher auf dem Kopf der Kolonne installiert.

In diesem Nachwäscher wird der im CO₂-abgereicherten Gas enthaltene aminhaltige Wasserdampf mit Hilfe eines Wärmetauschers gekühlt, so dass die Amin-Wasserdampflösung kondensiert. Diese wird vorteilhafterweise mittels eines Tropfenabscheiders zurück in das System geführt.

Damit wird außerdem der Wasseraustrag aus dem Reaktionsprozess auf ein Minimum reduziert, was den Wasserbedarf für den Waschprozess deutlich vermindert.

Ein geeigneter Nachwäscher hat eine Höhe von ca. 6 Metern, so dass sich für die Waschkolonne incl. Nachwäscher bei den oben beschriebenen Parametern eine Gesamthöhe von ca. 36 Metern ergibt.

Spezielle Gasseparatoren, gegebenenfalls mit nachgeschalteten Vorrichtungen zur Nutzung der im heissen Gas enthaltenen thermischen Energie, und/oder eine Verbrennungsvorrichtung mit Zusatzausstattung, welche eine optimal saubere Verbrennung gewährleistet, können zur Nachrüstung bestehender Anlagen ausgelegt und für die Verwendung in entsprechenden Umrüstungsverfahren optimiert sein.

### Kurze Beschreibung der Zeichnungen

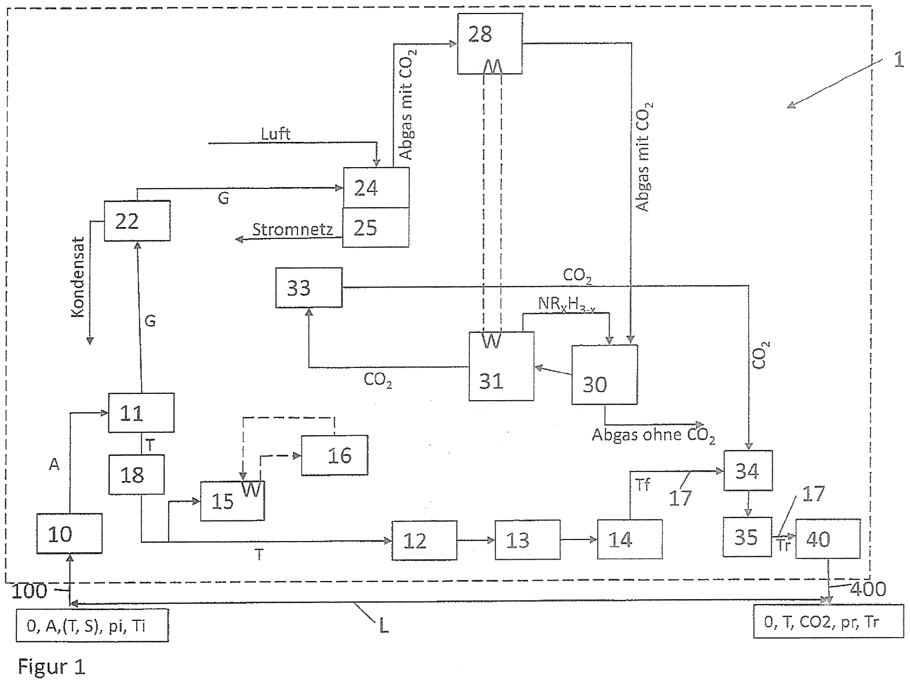

Weitere Ausgestaltungen, Vorteile und Anwendungen der Erfindung ergeben sich aus den abhängigen Ansprüchen und aus der nun folgenden Beschreibung anhand der Figuren. Dabei zeigt
Figur 1 eine schematische Ansicht einer Geothermieanlage umfassend die zur Durchführung des erfindungsgemässen Verfahrens notwendigen oder sehr wünschenswerten Vorrichtungen,

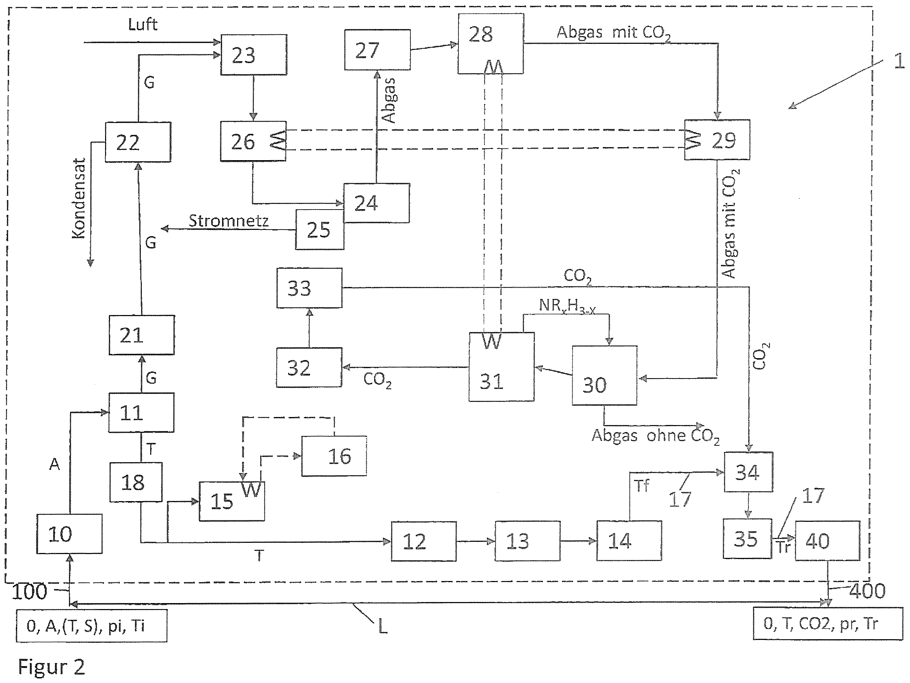

Figur 2 eine schematische Ansicht einer mit mehr Vorrichtungen ausgestatteten Geothermieanlage zur Durchführung des erfindungsgemässen Verfahrens,

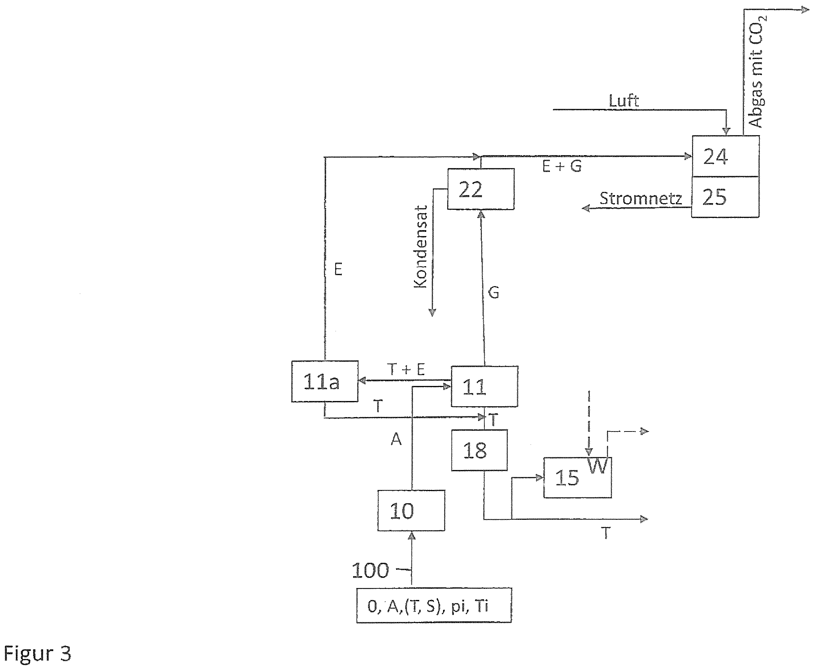

Figur 3 eine schematische Ansicht eines Teils einer Geothermieanlage gemäss Figur 1 mit einer Prozessführung unter Einschluss einer Erdölgewinnung,

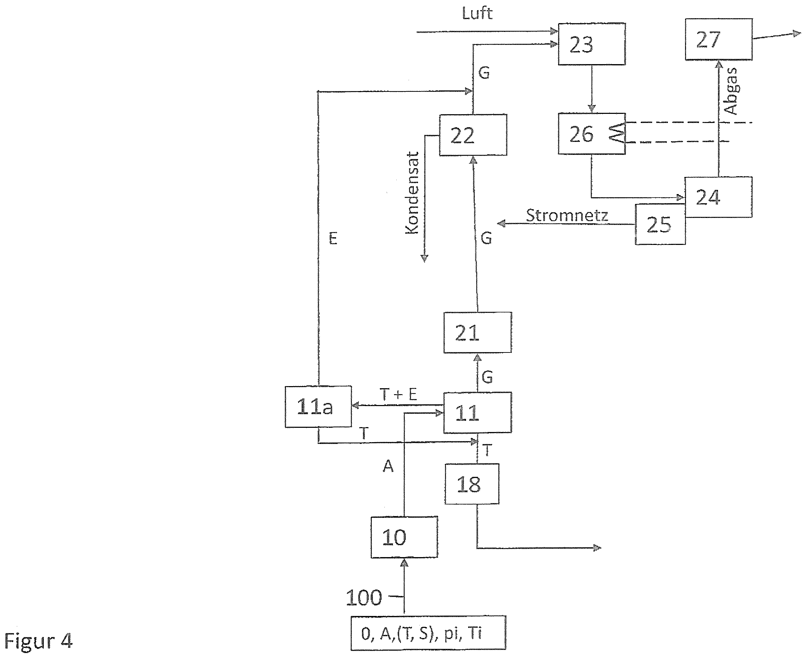

Figur 4 eine schematische Ansicht eines Teils einer Geothermieanlage gemäss Figur 2 mit einer Prozessführung unter Einschluss einer Erdölgewinnung,

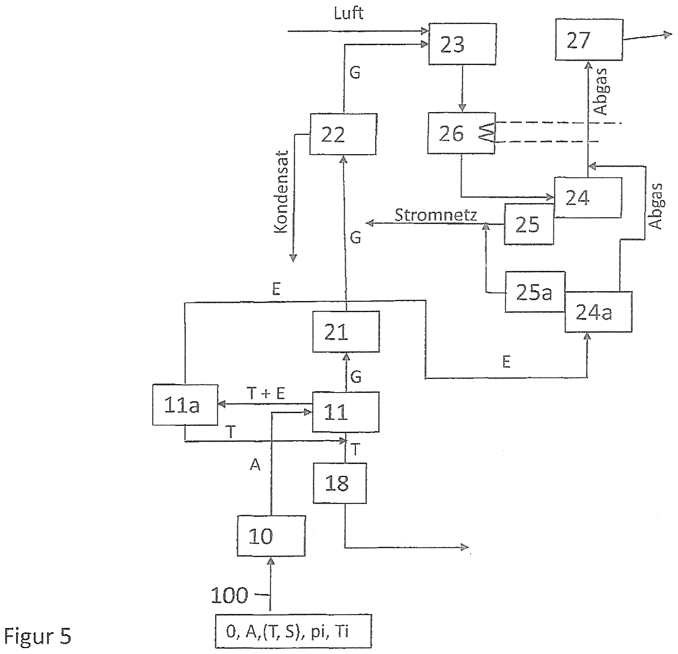

Figur 5 eine schematische Ansicht eines Teils einer Geothermieanlage gemäss den Figuren 2 und 4 mit getrennter Verbrennung von Erdgas und Erdöl.

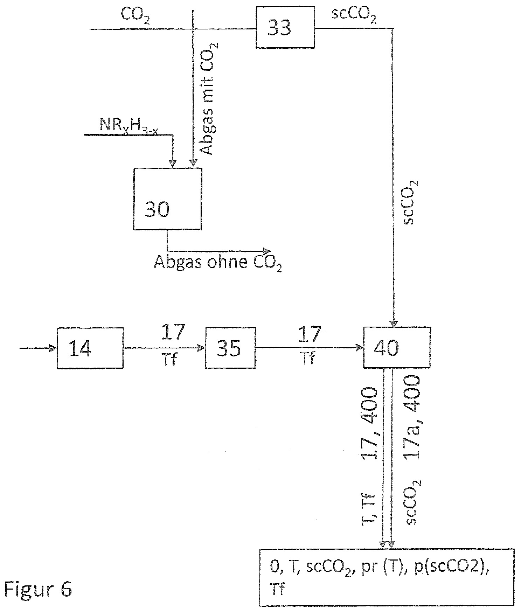

Figur 6 eine schematische Ansicht eines Teils einer Geothermieanlage gemäss Figur 1 oder 2 mit alternativer, getrennter Reinjektion von CO₂ als scCO₂ und Thermalwasser und
Figur 7 eine schematische Ansicht eines Teils einer Geothermieanlage gemäss Figur 1 oder 2 mit alternativer Nutzung des Thermalwassers zur Entsalzung von Meerwasser.

### Weg(e) zur Ausführung der Erfindung

In den Figuren ist eine hybride Geothermieanlage 1 schematisch dargestellt, die mit einem Aquifer 0 in einer geologischen Formation verbunden ist. Dieser Aquifer 0 enthält Aquiferfluid A, welches mit Gas G und gegebenenfalls Erdöl E versetztes Thermalwasser T ist. Das Aquiferfluid A weist vorzugsweise eine Anfangstemperatur Ti von 60°C und höher auf, sowie einen Anfangsdruck pi im Aquifer 0, der grösser ist als der Atmosphärendruck.

Als Aquiferfluid A ist prinzipiell jedes Aquiferfluid A geeignet, wobei Aquiferfluide A hoher Temperatur und mit hohem Gasgehalt und gegebenenfalls hohem Erdölgehalt bevorzugt sind. Bei Aquiferfluiden mit so tiefem Salzgehalt, dass bei der Einspeisung des gegebenenfalls mit CO₂-angereicherten, abgekühlten Thermalwassers keine Kristallisation erfolgt, welche zum Verstopfen der Einspeisleitungen führen könnte, sind die Wartungsarbeiten üblicherweise gering. Massnahmen, welche ein Verstopfen der Bohrungen und Leitungen generell verhindern, sind unten beschrieben.

Durch mehrere, beispielsweise 4, Entnahmebohrungen 100, die von einigen Metern bis in Tiefen von einigen Kilometern unter die Erdoberfläche reichen können, wird mindestens ein Zugang zum Aquifer 0 erreicht. Mittels einer Entnahmevorrichtung 10 im Bereich der jeweiligen Entnahmebohrung 100 wird Aquiferfluid A in die Geothermieanlage 1 eingespeist.

Jede Entnahmebohrung 100 verfügt über eine Entnahmevorrichtung 10 und jede Entnahmevorrichtung 10 umfasst eine Entnahmepumpe. Die Entnahme über mehr als eine, vorzugsweise vier Entnahmebohrungen mittels je einer Pumpe hat den Vorteil, dass die Pumpen im Normalbetrieb mit reduzierter Leistung, bei 4 Pumpen z.B. 2/3 ihrer Maximalleistung, betrieben werden können. Dadurch kann die Lebensdauer der Pumpen erhöht werden und fällt eine Pumpe, z.B. bei deren Wartung, aus, so kann die Förderleistung auf einfache Art konstant gehalten werden, indem die Leistung der anderen Pumpen entsprechend erhöht wird.

Das aus dem Aquifer 0 mittels mindestens einer Entnahmevorrichtung 10 entnommene Aquiferfluid A wird einer Gasseparationsvorrichtung 11 zugeleitet. Durch diese Gasseparationsvorrichtung 11 wird das Gas G und insbesondere der Anteil reinen Methans bzw. brennbarer Kohlenwasserstoffe dem Aquiferfluid A entnommen und getrennt vom Thermalwasser T geführt und genutzt.

Die Auftrennung des Aquiferfluids A in Thermalwasser T und (methanreiches) Gas G erfolgt mittels einer Separationsvorrichtung 11. In einer Ausführungsform einer solchen Gasseparationsvorrichtung 11 wird die Oberfläche des Aquiferfluids A stark vergrössert. Infolge der grossen Oberfläche, der hohen Temperatur des Aquiferfluids, welche der im Aquifer vorgefundenen Temperatur Ti (oft 60°C oder höher) entspricht, und der Entspannung des Aquiferfluids A von pi auf einen viel geringeren Druck, wie geringen Überdruck von z.B. 20 bis 500 hPa (alle Druckangaben bezeichnen den Überdruck gegenüber dem Umgebungsdruck), wird das Gas G vollständig oder zumindest nahezu vollständig vom Thermalwasser getrennt. Weitere Massnahmen sind nicht erforderlich. Die Oberflächenvergrösserung in der Separationsvorrichtung 11 kann auf verschiedene Arten erzielt werden, insbesondere dadurch, dass das Aquiferfluid A in heftige Bewegung versetzt wird, beispielsweise durch heftiges Rühren, oder durch Einsprühen des Aquiferfluids A in die Separationsvorrichtung 11 in Form kleiner Tröpfchen. Die Abführung des Gases erfolgt vorzugsweise kontinuierlich.

Da das abgetrennte Gas G einen hohen Feuchtigkeitsgehalt aufweist, wird es vor der Einspeisung in die Verbrennungsvorrichtung in einer Trocknungsvorrichtung 22 getrocknet. Dadurch wird der Gasverbrennung minimal verdünntes Gas G zugeführt. Da das Gas zudem eine erhöhte Temperatur ähnlich Ti aufweist, kann dessen thermische Energie in mindestens einer Vorrichtung zur Nutzung thermischer Energie, wie einem Wärmetauscher 21, genutzt werden, beispielsweise zur (Vor)erwärmung des Heizmediums, welches anschliessend in einem mit Thermalwasser betriebenen Wärmetauscher 12, 13, 14 seine Endwärme erhält.

In einer alternativen Gasseparationsvorrichtung 11 erfolgt die Trennung nicht unter geringem Überdruck, sondern unter substantiellem Überdruck von beispielsweise ca. 3 bar (3000 hPa) bei 104°C. Der Überdruck bewirkt, dass weniger Wasser gasförmig vorliegt und zusammen mit dem Gas abgeleitet wird, was zu wesentlich geringerer Belastung des Kondensators führt. Damit die Trennung von Gas und Wasser dennoch rasch erfolgt, ist ein Separator mit liegendem, zylindrischem Druckbehälter bevorzugt, d.h. ein Separator, dessen horizontale Ausdehnung grösser als dessen vertikale Ausdehnung ist. Das Aquiferfluid A kann auch in diesen Separator eingesprüht werden, meist reicht es aber aus, dieses lediglich, z.B. von oben, auf der einen Seite ein- und - möglichst weit von der Einleitung entfernt - auf der anderen Seite des Druckbehälters unten das entgaste Thermalwasser abzuleiten. Die Abführung des Gases erfolgt auch mit diesen Separatoren vorzugsweise kontinuierlich und auch bei dieser für Hochdruckbetrieb ausgelegten Ausführungsform der Gasseparationsvorrichtung 11 wird vorzugsweise noch ein Kondensator nachgeschaltet.

Enthält das Aquiferfluid A auch Erdöl E, so ist es bevorzugt, dass dieses in einem weiteren Separator, üblicherweise einem dem Gasseparator nachgeschalteten Separator, abgeschieden wird. Je nach Menge kann das Erdöl aus dem Kreislauf entfernt oder innerhalb des Kreislaufs einer Verbrennung zugeführt werden.

Bei Aquiferfluiden A, die unter sehr hohem Druck stehen, kann es erforderlich sein, diese vor der Einleitung in den Gasseparator 11 partiell, d.h. bis auf den im Kreislauf gewünschten Überdruck, zu entspannen. Die dabei freiwerdende Energie wird geeigneterweise ebenfalls genutzt, z.B. zur Stromerzeugung mittels einer Vorrichtung, wie einer mit einem Stromgenerator gekoppelten Turbine oder einem rückwärtslaufenden Kompressor.

Die thermische Energie des gasfreien bzw. entgasten und gegebenenfalls von Erdöl separierten Thermalwassers T wird innerhalb der Geothermieanlage 1 dadurch genutzt, dass das Thermalwasser T mittels einer Pumpe 18 mindestens einer Vorrichtung zur Nutzung der thermischen Energie 12 - 16 zugeführt wird. Bei dieser mindestens einen Vorrichtung zur Nutzung der thermischen Energie handelt es sich um insbesondere mindestens einen Wärmetauscher (dargestellt sind drei Wärmetauscher 12, 13, 14) bzw. eine Vorrichtung zur Erzeugung von Strom, wie eine Niederdruck-Wasserdampfmaschine oder eine Abwärmeverstromungsanlage oder eine ORC (Organic-Rankine-Cycle)-Verstromungsanlage 15, 16 (siehe unten). Diese Nutzung kann die Erwärmung mindestens eines im Kreislauf geführten Heizmediums oder Wärmeträgermediums sein. Das Heiz-/Wärmeträgermedium aus den Wärmetauschern 12, 13, 14 wird in nachfolgenden Prozessschritten, insbesondere in Form von Fernwärme zur Beheizung von Wohnungen, Treibhäusern etc. nutzbar gemacht oder zur Stromerzeugung.

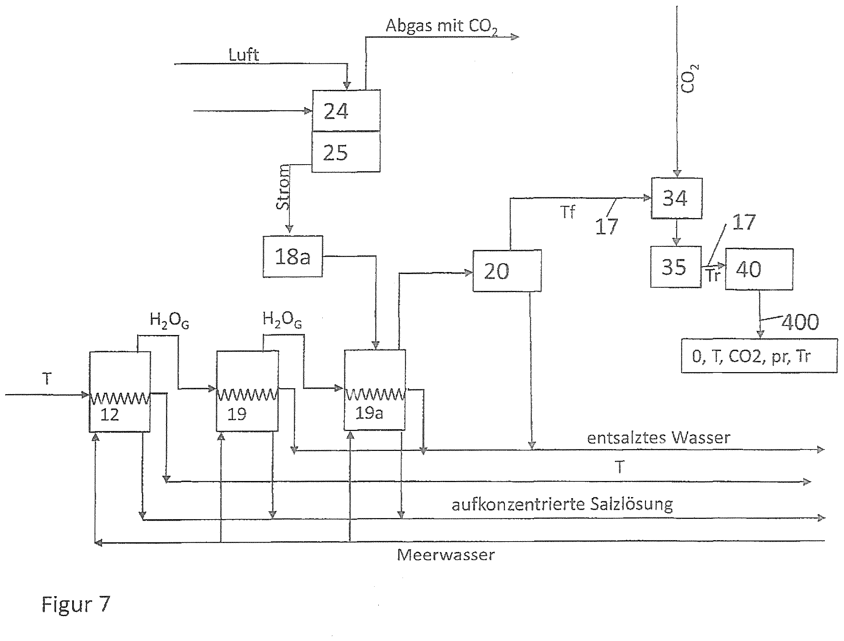

In einer alternativen Nutzung wird der Wärmetauscher zum Betrieb einer Tieftemperatur Entsalzungsanlage (Low Temperature Thermal Desalination (LTTD) Plant) verwendet. Dabei kann Salzwasser in mehreren in Serie geschalteten Wärmetauschern zuerst in einem oder mehreren mit Thermalwasser beheizten Wärmetauschern 12, 13, 14 und anschliessend gegebenenfalls mit einem oder mehreren mit Wasserdampf beheizten Wärmetauschern 19, 19a in Wasserdampf und aufkonzentriertes Salzwasser aufgetrennt werden (siehe Figur 7). Bei diesem Verfahren ist zu beachten, dass der Energiegehalt des Thermalwassers bzw. des Wasserdampfs ab Wärmetauscher 12 abnimmt und dass vorzugsweise auch der Druck abnimmt, was gegebenenfalls durch Einsatz einer Pumpe 18a gefördert werden kann. Als letzte Stufe in diesem Verfahren ist ein Kondensator geschaltet, der den am Ende des letzten Wärmetauschers verbleibenden Wasserdampf auskondensiert. Dieser Kondensator kann z.B. mit frischem Meerwasser als Kühlmedium betrieben werden.

Falls keine Wasserquelle, wie ein Meer, in der Nähe ist, kann anstelle des Meerwassers auch abgekühltes Thermalwasser oder eine andere nicht ausreichend saubere Wasserquelle eingesetzt werden, wobei Meerwasser bevorzugt ist.

Optional und bevorzugt, kann das Thermalwasser in einem den Wärmetauschern 12, 13, 14 vorgeschalteten Wärmetauscher 15 oder gegebenenfalls in einem in das Entsalzungsverfahren, z.B. zur Kondensation des Wasserdampfs in der letzten Stufe, integrierten Wärmetauscher (in den Figuren nicht gezeigt), zur Gewinnung elektrischer Energie verwendet werden. Ein geeignetes Verfahren zur Erzeugung von Strom verwendet z.B. eine Niederdruck-Wasserdampfmaschine oder eine Abwärmeverstromungsanlage oder eine ORC-Verstromungsanlage (15, 16). Ein speziell geeignetes und bevorzugtes Verfahren zur Erzeugung elektrischer Energie ist ein ORC-Verfahren (Organic-Rankine-Cycle) für Gasturbinen. Im ORC-Verfahren wird ein Wärmeträgermedium in einem Wärmetauscher 15 über den Siedepunkt erhitzt, dieses Wärmeträgermedium zum Betrieb einer Gasturbine 16 verwendet und nach Kondensation wieder dem Wärmetauscher 15 zugeführt. Für ein solches Verfahren geeignet sind Wärmeträgermedien mit Siedepunkten, die ca. 15 bis 25 °C unterhalb der Temperatur des Thermalwassers liegen, beispielsweise im Bereich von 45 bis 50°C, wie 49°C. Obschon der Wirkungsgrad solcher ORC-Verfahren gering ist (üblicherweise <20%, meist <15%) hat es sich gezeigt, dass der in einem vorgeschalteten Wärmetauscher erzeugte Strom meist für die Pumpenleistung ausreicht, die z.B. notwendig ist, um die in den anschliessenden Wärmetauschern 12, 13, 14 erwärmten Heizkreisläufe aufrecht zu erhalten.

Je nach Energiegehalt des Thermalwassers können die Nutzungen kombiniert werden, d.h. zur Energieerzeugung im ORC-Verfahren und/oder zur Erzeugung von Fernwärme und/oder zur Entsalzung.

Um den Verbrennungsprozess zu optimieren, wird der Verbrennungsvorrichtung 24 nicht reines Gas G sondern in einer Mischvorrichtung 23 mit Luft vorgemischtes Gas G zugeführt.

Das mit Luft vorgemischte Gas G wird vor Eintritt in die Verbrennungsvorrichtung 24 vorgeheizt. Dies kann mittels eines Wärmetauschers 26 erfolgen, dessen Heizmedium, z.B. Wasser, in einem im Abgasstrom angeordneten Wärmetauscher 29 durch Abgase aus der Gasverbrennung erhitzt wurde.

Auch in einem alternativen Verfahren, in dem neben Erdgas auch Erdöl verbrannt wird, kann eine Vormischung mit Luft zu besserer Verbrennung führen. Dann kann es allerdings sinnvoll sein, zusätzlich ein Einsprühen des Erdöls oder des Erdöl-Erdgas-Gemisches in feinen Tropfen vorzusehen.

In einer weiteren Ausführungsform mit getrennter Erdölverbrennung wird auf vorgängiges Mischen mit Luft oft verzichtet, wobei ein solches auch hier eingesetzt werden kann, insbesondere wenn das Erdöl in feinen Tröpfchen in die Mischkammer eingesprüht und unmittelbar in die Verbrennungsvorrichtung weitertransportiert werden kann.

Im erfindungsgemässen Verfahren wird mit einer Lambdasonde der Restsauerstoffgehalt des Abgases gemessen und dann das Verhältnis von zugeführter Verbrennungsluft zu Gas G, insbesondere Methan, und gegebenenfalls Erdöl E entsprechend gesteuert, entweder in einer Mischvorrichtung 23 und/oder direkt in der Verbrennungsvorrichtung 24. Das Verhältnis kann derart eingestellt werden, dass die Verbrennung mit hohem Wirkungsgrad und unter Erzeugung von möglichst wenig Schadstoffen erfolgt. Um bei der späteren Reinjektion in den Aquifer 0 Schäden im Aquifer 0 zu verhindern, muss vor allem darauf geachtet werden, dass kein Sauerstoff im Abgas vorhanden ist, da dieser, insbesondere durch chemischen Kohlenwasserstoffabbau, wie Methanabbau, Schäden im Aquifer 0 anrichten kann. Dies kann durch Gaswäsche in einer Gaswäscheanlage, insbesondere einem Aminwäscher 30 mit daran gekoppelter Ammoniumcarbonat-Spaltung 31 (siehe unten), erzielt werden, gegebenenfalls zusammen mit einer gesteuerten Verbrennung und/oder einer anschliessenden Abgasbehandlung in Abgasbehandlungsvorrichtung 27, z.B. mittels Katalysator.

Nach der mindestens einen Verbrennungsvorrichtung 24, 24a wird durch einen darin durchgeführten Verbrennungsprozess des Gases G und gegebenenfalls des Erdöls E mindestens ein Generator 25, 25a (vorzugsweise ein Generator pro Verbrennungsvorrichtung) angetrieben, welcher elektrische Energie liefert, die zum Betrieb von Vorrichtungen, wie Pumpen, innerhalb der Geothermieanlage verwendet oder ins Stromnetz eingespeist werden kann. Als Verbrennungsvorrichtung 24 können Gasmotoren oder Gasturbinen eingesetzt werden, als Verbrennungsvorrichtung 24a Dieselmotoren.

Eine der mindestens einen Verbrennungsvorrichtung 24, 24a und dem mindestens einen Generator 25, 25a nachgeschaltete Abgasbehandlungseinrichtung 27 sorgt dafür, dass eine bessere Verbrennung des Gases G, gegebenenfalls des Erdöls E und des Luftsauerstoffs erreicht wird, und dass vorzugsweise auch Kohlenmonoxid und Stickoxide entfernt werden, derart, dass die entstehenden weitergeleiteten Abgase vorzugsweise arm an bzw. frei von Sauerstoff, Kohlenwasserstoffen, Stickoxiden und Kohlenmonoxid sind und hauptsächlich Kohlendioxid, Stickstoff und Wasser enthalten. Als Abgasbehandlungseinrichtung 27 können beispielsweise Lambdasonden zusammen mit unterschiedlichen, bekannten Abgaskatalysatoren verwendet werden. Die Wahl eines geeigneten Katalysators richtet sich nach der Art der verwendeten Brennstoffe und der verwendeten Verbrennungsvorrichtung. Für Verbrennungsvorrichtungen, die bei Lambda-Werten von 1 betrieben werden, eignen sich beispielsweise geregelte Katalysatoren, wie ein Drei-Wege-Katalysator, bei Magermotoren ein Oxidationskatalysator, etc. Bei Verbrennung von Erdöl können aus Dieselfahrzeugen bekannte Katalysatoren und Partikelfilter alleine oder zusätzlich zu den für Gas bevorzugten Katalysatoren eingesetzt werden.

Bei mehr als einer Verbrennungsanlage 24, 24a werden die Abgasströme nach der Verbrennungsanlage oder zwischen oder nach einem oder mehreren Katalysatoren unterschiedlicher Eignung zusammengeführt.

Der Energieinhalt des aus der mindestens einen Verbrennungsvorrichtung 24, 24a austretenden Abgasstroms wird, gegebenenfalls nach katalytischer Nachbehandlung, in mindestens einer nachgeschalteten Abgasenergienutzvorrichtung zusätzlich genutzt. Der durch den Verbrennungsprozess resultierende Abgasstrom weist Temperaturen von einigen hundert °C, in der Regel grösser als 500°C auf, dessen Energieinhalt als Wärmequelle oder zur weiteren Stromerzeugung, z.B. in einem oder mehreren ORC-Verfahren, verwendet werden kann. Derzeit bevorzugt ist die Verwendung als Wärmequelle.

Für die Nutzung als Wärmequelle kann der Abgasstrom direkt zur Erwärmung eines Heizmediums, z.B. von Thermoöl oder Wasser, in einem oder mehreren Wärmetauschern 28, 29 verwendet werden. So kann z.B. das mit mehr als 500°C, wie 520°C, aus der Verbrennungsvorrichtung bzw. dem mindestens einen Katalysator austretende Abgas in einem Wärmetauscher 28 erst zur Erwärmung von Heizmedium verwendet werden, welches seinerseits wieder zur Rückgewinnung des CO₂ nach Aminwäsche (siehe unten) verwendet werden kann, und das auf unter 200°C, wie 140°C, abgekühlte Abgas kann in einem weiteren Wärmetauscher 29 zur Erhitzung von Heizmedium eingesetzt werden, das beispielsweise zur Vorwärmung des Luft-Gas-Gemisches oder des Luft-Gas-Erdöl-Gemisches oder des Gas-Erdöl-Gemisches vor dessen Zuführung zur Verbrennungsvorrichtung 24 bzw. eines allfälligen Luft-Erdölgemisches vor dessen Zuführung zur Verbrennungsvorrichtung 24a dienen kann. In dieser Stufe ist üblicherweise nur eine geringe weitere Abkühlung erwünscht, d.h. auf etwas über 100°C, wie 120°C, so dass keine Kondensation innerhalb der Leitungen erfolgt.

Anstelle der Nutzung der Energie des heissen Abgases als Heizmittel, kann dieses direkt aus der Verbrennungsvorrichtung 24 bzw. der Abgasreinigungsvorrichtung 27 oder nach mindestens einem oder zwischen mehreren Wärmetauschern 28, 29 auch zur weiteren Erzeugung elektrischer Energie verwendet werden. Die Gewinnung elektrischer Energie kann beispielsweise in einem oder mehreren ORC-Verfahren (Organic-Rankine-Cycle) für Dampfturbinen - wie oben bereits beschrieben, aber gegebenenfalls mit Wärmeträgermedium mit höherem Siedepunkt (bei mehreren hintereinandergeschalteten ORC-Verfahren mit abnehmendem Siedepunkt) - durchgeführt werden, aber auch mittels anderer Vorrichtungen zur Erzeugung von Strom, wie Niederdruck-Wasserdampfmaschinen oder Abwärmeverstromungsanlagen. Abwärme der Verbrennungsgase nach Erzeugung des elektrischen Stromes kann wie oben beschrieben zur Aufheizung des Luft-Gas-Gemisches oder zur Aufheizung von abgekühltem Thermalwasser oder abgekühltem, im Kreislauf geführtem Heizmedium für Fernwärme verwendet werden.

Das gesamte abgekühlte und energetisch genutzte Abgas, welches hauptsächlich aus Kohlendioxid besteht, wird zur Entfernung anderer Gase, wie Stickstoff und allenfalls geringer Reste an Stickoxiden, Kohlenmonoxid und Sauerstoff, - gegebenenfalls nach Vorwäsche - einem Gaswäscher 30, einer Aminwäscheanlage, zugeführt. In diesem Gaswäscher 30 wird das CO₂ aus dem Gasstrom entfernt. In der Aminwäscheanlage wird das CO₂ mit einem Amin, wie einem Amin der Formel NRₓH₃₋ₓ, beispielsweise einem Alkylamin, aus dem Gasstrom entfernt. Die gelöstes Ammoniumcarbonat enthaltende Lösung wird anschliessend bei einer Temperatur oberhalb 100°C, wie bei 140°C, in einer Vorrichtung zur Zersetzung von Ammoniumcarbonat (HNRₓH₃₋ₓ)_{y}H_{2-y}CO₃ (amine cooker) 31 (erhitzt mittels Heizmedium, das durch Abgas, z.B. in Wärmetauscher 28, erhitzt wurde), zersetzt. Das in Vorrichtung 31 freigesetzte Amin wird in den Gaswäscher 30 zurückgeführt. Das feuchte CO₂ wird über einen Kondensator 32 (gegebenenfalls einen Wärmetauscher und diesem nachgeschaltet ein Kondensator 32) einem Verdichter 33 zugeführt. In einer Ausführungsform wird das verdichtete CO₂ dem abgekühlten, zu rezyklierenden Thermalwasser in der Rückführleitung 17 mittels einer Vermischungsvorrichtung, wie einem Rieselwäscher, 34 beigemischt. In einer anderen Ausführungsform wird das CO₂ im Verdichter in superkritischen Zustand versetzt und direkt via die Rückführleitung 17a, die Rückführvorrichtung 40 und die Rückführbohrung 400 in den Aquifer 0 gepresst und zwar in eine Tiefe, die dem hydrostatischen Druck des scCO₂ entspricht.

Das im Kondensator 32 abgeschiedene Wasser mit einer Temperatur von üblicherweise unter 170 °C kann gegebenenfalls zur Gewinnung der darin enthaltenen Wärmeenergie dem Thermalwasser zugeführt werden, welches in einem Verfahren zur Erzeugung von Strom, wie einem ORC-Verfahren 15, 16 und/oder zur Erzeugung von Fernwärme in einem der Wärmetauscher 12, 13, 14 verwendet wird. Ist dem Kondensator 32 ein Wärmetauscher vorgeschaltet, so kann die darin gewonnene Energie z.B. zur Aufheizung des Thermalwassers für die Verwendung im ORC-Verfahren 15, 16 genutzt werden, oder zur direkten zusätzlichen Erwärmung des Wärmeträgermediums im ORC-Verfahren.

Die in den Abgasen aus den Verbrennungsprozessen enthaltene Wärme kann - falls diese im Überschuss vorhanden ist - an beliebiger Stelle auch in einem oder mehreren Wärmetauschern einer Entsalzungsanlage (konventionell oder nach dem oben und in Figur 7 beschriebenen LTTD-Verfahren) genutzt werden.

Das abgekühlte Thermalwasser T weist nach dem letzten Wärmetauscher, z.B. Wärmetauscher 14, eine Temperatur Tf auf, woraus der zur Lösung des Kohlendioxids im Thermalwasser notwendige Druck bestimmbar ist. Als geeignete Temperatur Tf und Temperatur des rückgeführten Thermalwassers Tr haben sich Werte kleiner gleich 35°C, insbesondere kleiner gleich 32°C, speziell bevorzugt Werte von kleiner gleich 30°C, wie kleiner gleich 27°C erwiesen. Druck und Temperatur müssen so gewählt werden, dass sich das CO₂ im gekühlten Thermalwasser vollständig löst. Zur Lösung der gesamten bei der Verbrennung entstandenen Menge an Kohlendioxid im abgekühlten Thermalwasser ist beispielsweise bei einer Temperatur von 27°C üblicherweise ein Druck von mindestens 9 bar erforderlich.

Verfahrenstechnisch muss die Lösung des Kohlendioxids derart durchgeführt werden, dass die Bildung von Gasblasen verhindert wird, was durch die Abkühlung des Thermalwassers, Wahl des Druckes wie oben erwähnt und eine geeignete Vermischungsvorrichtung, insbesondere einen Rieselwäscher 34 erreicht werden kann. Der Rückführ- /Reinjektionsdruck pr auf das mit Abgas bzw. CO₂-versetzte Thermalwasser entspricht üblicherweise mindestens dem Anfangsdrucks pi auf das Aquiferfluid im Aquifer 0. Eine Explosionsgefahr bei der Einleitung des Abgases in das Thermalwasser ist ausgeschlossen, da bei der Verbrennung darauf geachtet wurde, dass sich weder brennbare Kohlenwasserstoffe noch Sauerstoff im Abgas befinden und die Prozessführung vollständig geschlossen ist, so dass Zutritt von Luftsauerstoff aus der Umgebung verhindert wird. Für die Einleitung bzw. Lösung des Kohlendioxids im Thermalwasser sollten der Gasdruck und der Flüssigkeitsstand im Rieselwäscher 34 kontrolliert werden.

Durch mindestens eine und vorzugsweise gleich viele Reinjektionsbohrungen 400 wie Entnahmebohrungen 100, an welche je eine Rückführvorrichtung 40 mit mindestens einer Reinjektionspumpe 35 gekoppelt ist, kann das mit Kohlendioxid versetzte Thermalwasser unter einer Rückführtemperatur Tr und einem Rückführdruck pr zurück in den Aquifer 0 geleitet werden. Verschiedene Messungen haben gezeigt, dass durch die Rückführung des entstandenen Kohlendioxids die Freisetzung von Gas G aus den Gesteinsschichten des Aquifers 0 angeregt wird, sodass durch die Durchführung des Verfahrens die Nutzungsdauer des Aquifers 0 verlängert werden kann.

Wenn die Temperatur Tf nach dem letzten Wärmetauscher noch eine Temperatur von 35°C oder mehr aufweist, hat es sich als vorteilhaft erwiesen, das CO₂ in superkritischen Zustand zu versetzen (scCO₂) und dieses getrennt vom Thermalwasser in den Aquifer zu pumpen. Die Einleitung ins Thermalwasser erfolgt dann bei einem Druck im Aquifer, der dem Druck des scCO₂ entspricht (üblicherweise bei ca. 31°C ca. 74 bar). Ein solcher Druck wird meist in einer Tiefe von 700 bis 800 m erreicht. Nach der Einleitung bzw. dem Lösen des scCO₂ im Thermalwasser T kann diese Lösung noch tiefer in den Aquifer geleitet werden.

Eine Erhöhung des CO₂-Gehalts im geförderten Aquiferfluid infolge der Reinjektion des CO₂-haltigen Thermalwassers wird nicht erwartet, da das abgekühlte, reinjizierte, CO₂-haltige Thermalwasser höhere Dichte aufweist als das heisse Aquiferfluid und deshalb innerhalb des Aquifers 0 absinkt, so dass in einem oberen Bereich des Aquifers 0 entnommenes Aquiferfluid CO₂-arm bleibt und aufgrund des Abstands zwischen Einspeisung und Entnahme. Berechnungen zufolge sollte bei durchschnittlichen Aquifergrössen eine Nutzung während Jahren möglich sein, ohne dass mit einem Anstieg des CO₂-Gehalt im Aquiferfluid A von mehr als 2 % gerechnet werden muss.

Das hier vorgestellte Verfahren stellt (mit den hier beschriebenen Ausnahmen) einen geschlossenen Kreislauf dar, wobei die Nutzung der Energie des entnommenen Aquiferfluids A maximiert wird und das entnommene Thermalwasser und die erzeugten Abgase nach der Nutzung wieder über die mindestens eine Reinjektionsbohrung 400 in den Aquifer 0 zurückgespiesen werden. Die mindestens eine Reinjektionsbohrung 400 ist von den Entnahmebohrungen 100 im Aquifer 0 um einen Abstand L beabstandet angeordnet. Um den Aquifer 0 nicht zu stark zu stören ist es vorteilhaft, die Entnahmebohrung 100 und die Reinjektionsbohrung 400 um einige hundert Meter bis wenige Kilometer voneinander zu beabstanden. Vorzugsweise sind die Entnahmevorrichtung 10 und die Rückführvorrichtung 40 voneinander unabhängig ausgeführt, wobei jeweils eine Pumpvorrichtung eingesetzt wird, um Aquiferfluid A bzw. CO₂ und Thermalwasser T getrennt voneinander zu entnehmen bzw. zu reinjizieren.

Um Verstopfen der Entnahme- und der Reinjektionsbohrungen zu vermeiden hat es sich bei diesem Verfahren als machbar und bevorzugt herausgestellt, wenn die Verfahrensrichtung umkehrbar ist, d.h. dass eine Entnahmebohrung 100 zur Reinjektionsbohrung 400 wird und die Reinjektionsbohrung 400 zur Entnahmebohrung 100. Dies kann erzielt werden, indem jede Bohrung bzw. jede Entnahme- und Reinjektionsvorrichtung mit zwei Pumpen bestückt wird, von denen die eine der Entnahme, die andere der Reinjektion dient, und indem jede Bohrung mit Leitungen versehen ist, die entweder die Einspeisung in die Separationsvorrichtung 11 oder die Rückführung in den Aquifer 0 erlauben und je nach Bedarf angesteuert werden können. Weitere Voraussetzung ist, dass die Entnahmebohrungen 100 und die Reinjektionbohrungen 400 nahe der Geothermieanlage liegen und an der Oberfläche wenig beabstandet sind, was durch schräge Ausführung der Bohrungen ermöglicht wird, z.B. derart, dass der Abstand an der Oberfläche beispielsweise 5 m bis 15 m, wie ca. 10 m, beträgt, im Aquifer 0 bis zu ca. 2 km.

In einer Abwandlung kann neben dem in der Verbrennungsvorrichtung 24 entstandenen Kohlendioxid zusätzlich noch anthropogenes Kohlendioxid aus der Industrie oder anderen Quellen im Thermalwasser gelöst und durch die Reinjektionsbohrung 400 in dem Aquifer 0 geleitet und geologisch gespeichert werden. Damit ist eine zusätzliche Sequestrierung von Kohlendioxid erreichbar.

Eine allfällige Zuführung von zusätzlichem anthropogenem CO₂ erfolgt vorzugsweise vor dem Gaswäscher, damit dieses CO₂ mitgereinigt wird.

Die Rückführung des gegebenenfalls mit dem Abgas gemischten Thermalwassers führt unter Umständen zu einer Anregung des Aquifers 0 und kann dadurch die Nutzung der Ressourcen verlängern.

Je nach Auslegung der einzelnen Teile der Geothermieanlage und dem Energiegehalt des Aquifers können mehr als eine der oben beschriebenen Vorrichtungen/Anlagen - parallel oder in Serie geschaltet - vorhanden sein, und diese sind von der vorliegenden Erfindung ebenfalls umfasst, auch wenn dies nicht speziell erwähnt wurde.

### Nachrüstung:

Für einige bestehende Geothermieanlagen kann es sinnvoll sein, diese so nachzurüsten, dass das Energienutzungsverfahren an das oben erläuterte, optimierte Energienutzungsverfahren angenähert werden kann oder dass sogar dieses optimierte Energienutzungsverfahren durchführbar ist. Eine bestehende Geothermieanlage zur Nutzung der inneren Energie von mit Gas G und gegebenenfalls Erdöl E gemischtem geothermischem Thermalwasser T aus einem Aquifer 0, umfasst üblicherweise heute eine Entnahmevorrichtung 10 für Aquiferfluid A, eine Gasseparationsvorrichtung 11, eine Verbrennungsvorrichtung 24 für separiertes Gas G sowie eine Rückführvorrichtung 40 zur Reinjektion des abgekühlten Thermalwassers T in den Aquifer 0.

Solche Anlagen können einerseits durch eine der speziell vorteilhafte Separationsvorrichtungen 11 nachgerüstet werden,
(i) in der die Abtrennung des Gases G vom Thermalwasser T durch Erzeugung einer grossen Oberfläche, die Temperatur und gegebenenfalls die Entspannung des unter Druck geförderten Aquiferfluids erfolgt, oder
(ii) in der die Trennung des Gases G vom Thermalwasser T in einem Separator mit grosser Oberfläche unter Druck erfolgt, und
aus der das Gas bei einer Temperatur ähnlich Ti austritt und gegebenenfalls in mindestens einer Vorrichtung zur Nutzung thermischer Energie, insbesondere Wärmetauscher 21, genutzt werden kann.

Alternativ oder zusätzlich können bestehende Anlagen durch eine Abgasreinigungs-/Nutzungsanlage, umfassend die folgenden Zusatzvorrichtungen aufgerüstet werden:
(i) mindestens eine Vorrichtung zur Erzeugung von Strom, wie einen Gasmotor mit nachgeschaltetem Generator und/oder eine ORC-Verstromungsanlage,
(ii) mindestens einen Wärmetauscher zur Nutzung der im Abgas enthaltenen Energie,
(iii) einen Gaswäscher 30, gekoppelt mit einem Verdichter zur (a) Einleitung von CO₂ in das abgekühlte Thermalwasser vor dessen Reinjektion in den Aquifer 0 oder (b) zur Verdichtung des CO₂ bis in den superkritischen Zustand und dessen direkte Reinjektion in den Aquifer 0, wobei der Gaswäscher ein Aminwäscher 30 mit daran anschliessender Vorrichtung zur Zersetzung des im Aminwäscher gebildeten Ammoniumcarbonats (amine cooking) 31 ist,
(iv) einen Rieselwäscher 34 zur Vermischung des CO₂ mit dem Thermalwasser,
(v) eine der Verbrennungsvorrichtung 24 vorgeschaltete Mischvorrichtung zum Mischen des Gases und gegebenenfalls des Erdöls mit Verbrennungsluft 23 und eine der mindestens einen Verbrennungsvorrichtung 24, 24a nachgeschaltete Abgasreinigungsvorrichtung 27, umfassend mindestens einen Katalysator und eine Lambdasonde zur Steuerung der Verbrennung/Vormischung des Gases mit Verbrennungsluft,
   sowie optional mit einer oder mehreren der folgenden Zusatzvorrichtungen
(vi) wenn das Aquiferfluid kein Erdöl und kein oder zu wenig Gas enthält einen Anschluss an eine Erdgas-Pipeline oder Erdöl-Pipeline zur Einspeisung von Erdgas oder Erdöl in die Mischvorrichtung 23 oder die Verbrennungsvorrichtung 24, 24a, so dass die Geothermieanlage für das CCS (carbon capture and storage)-Verfahren eingesetzt werden kann,
(vii) Kopplung an eine Entsalzungsanlage, wie eine nach dem LTTD-Verfahren arbeitende Entsalzugnsanlage, insbesondere eine Anlage zur Entsalzung von Meerwasser,
(viii) falls der Aquifer unter sehr hohem Druck steht eine der Separationsvorrichtung vorgeschaltete Entspannungsvorrichtung, welche Druck in Strom verwandelt.

Werden die obengenannten zusätzlichen Vorrichtungen (i) bis (v) und gegebenenfalls (vi) bis (viii) an eine bestehende Geothermieanlage angebaut, kann der Energieinhalt des Aquiferfluids A besser bis nahezu vollständig genutzt werden und die Rückführung des CO₂-enthaltenden Thermalwassers ohne Beeinträchtigung des Aquifers 0 erfolgen.

Das erfindungsgemässe Verfahren bzw. die erfindungsgemässe Geothermieanlage können auch bei Aquiferen eingesetzt werden, die wenig oder keine brennbaren Gase und/oder wenig oder kein Erdöl enthalten, vorausgesetzt, dass eine externe Gasquelle, insbesondere eine Erdgasquelle, wie eine Gas-Pipeline, verfügbar ist. Bei einer solchen Anlage entfällt die Gasseparationsvorrichtung 11 und das Aquiferfluid/Thermalwasser wird direkt der Nutzung thermische Energie 12-16 zugeführt. Externes Gas wird direkt in die Verbrennungsvorrichtung, resp. in eine dieser vorgeschaltete, die Verbrennung fördernde Vorrichtungen geleitet. Alternativ, aber weniger bevorzugt, kann auch eine externe Erdölquelle verwendet werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

### Bezugszeichenliste

- 0: Aquifer / Grundwasserleiter
- 1: Geothermieanlage
10 Entnahmevorrichtung
100 Entnahmebohrung
11 Gasseparationsvorrichtung (Separator)
11a Erdölseparationsvorrichtung (Ölseparator)
12-14 Vorrichtungen bzw. Einrichtungen zur Nutzung der thermischen Energie des Thermalwassers, insbesondere Wärmetauscher
15, 16 Vorrichtungen zur Nutzung der thermischen Energie des Thermalwassers zur Stromerzeugung, wie eine Niederdruck-Wasserdampfmaschine oder eine Abwärmeverstromungsanlage oder insbesondere eine ORC-Verstromungsanlage
17 Rückführ-/Reinjektionsleitung
18 Pumpe
18a Pumpe zur geringen Druckerniedrigung im LTTD-Verfahren
19, 19a Wärmetauscher zur Nutzung der im Wasserdampf enthaltenen Energie in einem LTTD-Verfahren
20 Kondensator oder ORC-Verstromungsanlage
21 Vorrichtung (Wärmetauscher) zur Nutzung der thermischen Energie des Gases
22 Vorrichtung (Kondensator) zur Trocknung des Gases unter Abführung von Kondenswasser und gegebenenfalls zur Nutzung der thermischen Energie des Gases
23 Mischvorrichtung
24, 24a (Gas-)Verbrennungsvorrichtung
25, 25a (Strom)generator
26 Wärmetauscher zur Vorwärmung des Gases
27 Abgasbehandlungseinrichtung / Abgasbehandlungsvorrichtung / Abgaskatalysator und Lambdasonde
28, 29 Vorrichtung zur Nutzung thermischer Energie im Abgas/Abgasenergienutzungsvorrichtung, insbesondere Wärmetauscher
30 Gaswäscheanlage, Gaswäscher (Aminwäscher, Aminwäscheanlage)
31 Vorrichtung zur Spaltung von Ammoniumcarbonat (amine cooker)
32 Kondensator
33 Verdichter
34 Vermischungsvorrichtung, vorzugsweise Rieselwäscher
35 Reinjektionspumpe
40 Rückführvorrichtung / Sequestriervorrichtung
400 Reinjektionsbohrung
- A: Aquiferfluid / Thermalwasser mit Gas versetzt (T+G)
- Ti: Anfangstemperatur des Aquiferfluids
- pi: Anfangsdruck
- T: Thermalwasser
- Tf: Temperatur des abgekühlten, entgasten Thermalwassers
- Tr: Temperatur des rückgeführten, CO₂-haltigen Thermalwassers
- pr: Rückführungsdruck auf das mit Abgas versetzte Thermalwasser
- G: Gas
- E: Erdöl
- L: Abstand zwischen Entnahmebohrung und Reinjektionsbohrung

## Patentansprüche

1. Ein Verfahren zur Nutzung der inneren Energie eines Aquiferfluids (A), umfassend mit gelöstem, brennbarem Gas (G) und gegebenenfalls Erdöl (E) gemischtes geothermisches Thermalwasser (T) in einem geschlossenen Kreislauf, **gekennzeichnet durch** die Schritte
- Entnahme des Aquiferfluids (A) aus einem Aquifer (0) durch mehr als eine Entnahmebohrung (100), wobei jede Entnahmebohrung (100) über eine Entnahmevorrichtung (10) im Bereich der Entnahmebohrung (100) verfügt, mittels derer das Aquiferfluid (A) entnommen wird, und wobei jede Entnahmevorrichtung (10) eine Entnahmepumpe umfasst,
- Separation des Gases (G) durch Entgasung des Aquiferfluids (A) in einer Gasseparationsvorrichtung (11), wobei entgastes Thermalwasser (T) resultiert,
- gegebenenfalls Separation von Erdöl (E), wobei entgastes und entöltes Thermalwasser (T) resultiert,
- Nutzung der Wärmeenergie des entgasten Thermalwassers (T) in mindestens einer Vorrichtung zur Nutzung thermischer Energie, wie einem Wärmetauscher (12, 13, 14) und/oder einer ORC-Verstromungsanlage (15, 16), sowie
- Durchführung eines Verbrennungsprozesses des separierten Gases (G) und gegebenenfalls des separierten Erdöls (E) in mindestens einer Verbrennungsvorrichtung (24, 24a), insbesondere einem Gasmotor und gegebenenfalls einem Dieselmotor, und Nutzung der inneren Energie des Gases (G) und gegebenenfalls des Erdöls (E) durch den Betrieb mindestens eines Generators (25, 25a),
- Entfernung unerwünschter Stoffe aus den Abgasen des Verbrennungsprozesses mittels einer Abgasreinigungsvorrichtung zur Abtrennung von CO₂ aus den abgekühlte Abgasen, umfassend einen Aminwäscher (30) mit nachfolgender Vorrichtung zur Zersetzung von Ammoniumcarbonat (31), die erhitzt wird mittels eines Heizmediums, das durch die Abgase in einem Wärmetauscher (28) erhitzt wurde, und Rückführung des Amins in den Aminwäscher (30), und
- Reinjektion des CO₂ und des abgekühlten Thermalwassers (T) in den Aquifer (0) mittels mindestens einer Rückführvorrichtung (40) durch mindestens eine Reinjektionsbohrung (400), die von den Entnahmebohrungen (100) beabstandet angeordnet ist, und
* wobei, wenn das Thermalwasser bis unter 35°C oder tiefer abgekühlt wurde, das CO₂ verdichtet und in die Rückführleitung (17) für das Thermalwasser eingepresst und mit diesem zusammen über die Rückführvorrichtung in den Aquifer (0) reinjiziert wird, oder
* wobei, wenn das Thermalwasser nach dem letzten Wärmetauscher(12, 13, 14) noch eine Temperatur von 35°C oder mehr aufweist, das CO₂ bis in den superkritischen/überkritischen Zustand (scCO2) verdichtet und getrennt vom Thermalwasser in den Aquifer zurückgeleitet wird, bis in Tiefen, in denen der Druck im Aquifer etwa dem Druck des scCO₂ entspricht und wobei nach dem Lösen des scCO₂ im Thermalwasser die Lösung gegebenenfalls noch tiefer in den Aquifer geleitet wird,
- wobei der mindestens einen Verbrennungsvorrichtung (24, 24a) eine Mischvorrichtung (23) zum Mischen des Gases und gegebenenfalls Erdöls (E) mit Verbrennungsluft vorgeschaltet wird, wobei das Mischverhältnis in der Mischvorrichtung (23) mittels einer im Abgasstrom angeordneten Lambdasonde gesteuert wird,
- wobei die Gas-Luft-Mischung oder die Erdöl-Luft-Mischung oder die Erdöl-Erdgas-Mischung vor deren Einspeisung in die mindestens eine Verbrennungsvorrichtung (24, 24a) in einem Wärmetauscher (26) vorgeheizt wird, und
- wobei Abgasreinigung in einer der Verbrennungsvorrichtung (24) nachgeschaltete Abgasreinigungsvorrichtung (27), insbesondere einem Katalysator, erfolgt.

2. Das Verfahren zur Nutzung der inneren Energie eines Aquiferfluids (A) nach Anspruch 1, wobei der mindestens eine Wärmetauscher (12, 13, 14) zur Erwärmung mindestens eines im Kreislauf geführten Heizmediums und/oder zur Durchführung eines Entsalzungsverfahrens, insbesondere nach dem LTTD-Verfahren, verwendet wird.

3. Das Verfahren zur Nutzung der inneren Energie eines Aquiferfluids (A) nach einem der vorhergehenden Ansprüche, wobei jede Reinjektionsbohrung mit einer Reinjektionsvorrichtung (40) versehen ist.

4. Das Verfahren zur Nutzung der inneren Energie eines Aquiferfluids (A) nach einem der vorhergehenden Ansprüche, wobei die Entnahme von Aquiferfluid (A) gleichzeitig über mehrere Entnahmebohrungen (100) und die Reinjektion gleichzeitig über mehrere Reinjektionsbohrungen (400) erfolgt, wobei jede Bohrung mit einer Entnahme- bzw. Reinjektionsvorrichtung (10, 40) versehen ist.

5. Das Verfahren zur Nutzung der inneren Energie eines Aquiferfluids (A) nach einem der vorhergehenden Ansprüche, wobei das CO₂, insbesondere mittels einer Vermischungsvorrichtung (34), wie einem Rieselwäscher, in das abgekühlte Thermalwasser (T) eingeleitet wird und anschliessend Reinjektion des mit CO₂ versetzten Thermalwassers in den Aquifer (0) erfolgt, wobei die Bildung von Gasblasen bei der Reinjektion des mit CO₂ versetzten Thermalwassers vermieden wird, indem ein Rückführungsdruck (pr) auf das Kohlendioxid und eine Rückführtemperatur Tr derart gewählt werden, dass sich das CO₂ im Thermalwasser vollständig löst.

6. Das Verfahren zur Nutzung der inneren Energie eines Aquiferfluids (A) nach einem der vorhergehenden Ansprüche, wobei das Aquiferfluid (A) vor dessen Einleitung in eine Separationsvorrichtung (11) in einer der Separationsvorrichtung (11) vorgeschalteten Entspannungsvorrichtung, welche Druck in Strom verwandelt, entspannt wird.

7. Eine Geothermieanlage zur Nutzung der inneren Energie von mit gelöstem, brennbarem Gas (G) und gegebenenfalls Erdöl (E) gemischtem geothermischem Thermalwasser (T) aus einem Aquifer (0) in einem geschlossenen Kreislauf, umfassend
- mehrere Entnahmebohrungen (100), wobei jede Entnahmebohrung (100) über eine Entnahmevorrichtung (10) für Aquiferfluid (A) im Bereich der jeweiligen Entnahmebohrung (100) verfügt zur Entnahme des Aquiferfluids (A), und wobei jede Entnahmevorrichtung (10) eine Entnahmepumpe umfasst,
- eine Gasseparationsvorrichtung (11) zur Auftrennung des Aquiferfluids (A) in Thermalwasser (T) und Gas (G),
- gegebenenfalls eine Separationsvorrichtung (11a) zur Separation von Erdöl aus dem gegebenenfalls bereits entgasten Thermalwasser (T),
- mindestens eine Vorrichtung zur Nutzung thermischer Energie, wie mindestens einen Wärmetauscher (12, 13, 14), zur Nutzung der im Thermalwasser (T) enthaltenen thermischen Energie zur Erwärmung von im Kreislauf geführtem Heizmedium und/oder mindestens eine Vorrichtung zur Nutzung thermischer Energie zur Stromerzeugung, insbesondere eine ORC-Verstromungsanlage (15, 16) und/oder zum Betrieb einer Entsalzungsanlage, insbesondere einer nach dem LTTD-Verfahren betriebenen Entsalzungsanlage,
- eine Verbrennungsvorrichtung (24) für separiertes Gas, insbesondere einen Gasmotor, mit mindestens einem daran gekoppelten Generator (25) zur Erzeugung von elektrischem Strom,
- gegebenenfalls eine Verbrennungsvorrichtung (24a) für separiertes Erdöl, insbesondere einen Dieselmotor, mit mindestens einem daran gekoppelten Generator (25a) zur Erzeugung von elektrischem Strom,
- mindestens eine Vorrichtung zur Nutzung der thermischen Energie im Abgasstrom (28, 29) der Verbrennungsvorrichtung (24), von denen mindestens eine ein Wärmetauscher ist,
- einen im Abgasstrom der Verbrennungsvorrichtung (24) nach der mindestens einen Vorrichtung zur Nutzung dessen thermischer Energie (28, 29) angeordneten Gaswäscher (30) zur Abtrennung von CO₂, wobei der Gaswäscher ein Aminwäscher ist mit nachfolgender Vorrichtung zur Zersetzung von Ammoniumcarbonat (31), die erhitzt wird mittels eines Heizmediums, das durch die Abgase im Wärmetauscher (28) erhitzt wurde, und Rückführung des Amins in den Aminwäscher (30),
- eine Zuleitung für das nach der Gaswäsche erhaltene CO₂
* in einen Verdichter und anschliessend über eine Vermischungsvorrichtung, vorzugsweise einen Rieselwäscher (34), in eine Rückführleitung (17) für das aus dem mindestens einen Wärmetauscher (14) oder einer ORC-Verstromungsanlage oder einer Entsalzungsanlage ausgetretene Thermalwasser, wenn das Thermalwasser bis unter 35°C oder tiefer abgekühlt wurde oder
* in einen Verdichter zur Überführung des CO₂ in den superkritischen Zustand und anschliessend in eine Zuführleitung (17a) für scCO₂, die getrennt von einer Zuführleitung (17b) für Thermalwasser (T) ist und die beide in den Aquifer (0) führen, wenn das Thermalwasser nach dem letzten Wärmetauscher (12, 13, 14) noch eine Temperatur von 35°C oder mehr aufweist, wobei die Zuführleitung für scCO2 (17a) und die Zuführleitung für abgekühltes Thermalwasser (17b) derart sind, dass die Einleitung des scCO2 ins abgekühlte Thermalwasser bei einem Druck im Aquifer durchführbar ist, der dem Druck des scCO2 entspricht,
- mindestens eine Rückführvorrichtung (40) zur Reinjektion des Kohlendioxids und des abgekühlten Thermalwassers durch mindestens eine Reinjektionsbohrung (400) in den Aquifer (0), die von den Entnahmebohrungen (100) beabstandet angeordnet ist, und
- eine der mindestens einen Verbrennungsvorrichtung (24, 24a) vorgeschaltete Mischvorrichtung (23) zum Mischen des Gases oder des Gases und des Erdöls mit Verbrennungsluft, sowie
- eine der Verbrennungsvorrichtung nachgeschaltete Abluftreinigungsvorrichtung (27), wie einen Katalysator.

8. Die Geothermieanlage nach Anspruch 7, wobei die Verbrennungsvorrichtung (24) als Gasmotor ausgestaltet ist und die Abgasbehandlungsvorrichtung (27) einen Katalysator und eine Lambdasonde umfasst und wobei der Verbrennungsvorrichtung (24) eine Mischvorrichtung (23) vorgeschaltet ist, die in Abhängigkeit der Messung der Lambdasonde die Zumischung von Sauerstoff regelt, sodass eine gesteuerte Verbrennung durchführbar ist.

9. Die Geothermieanlage nach Anspruch 7 oder 8, wobei diese eine Zuführleitung für zusätzliches Kohlendioxid aus einer anthropogenen Quelle aufweist, derart, dass dieses dem Abgas, vorzugsweise vor dem Gaswäscher (30), zugeführt werden kann, sodass dieses zusammen mit dem aus dem Abgas stammenden CO₂ im abgekühlten Thermalwasser mittels einer Vermischungsvorrichtung, insbesondere einem Rieselwäscher (34) gelöst und mittels der Rückführvorrichtung (40) in den Aquifer (0) zurückgeführt werden kann, oder sodass dieses zusammen mit dem aus dem Abgas stammenden CO₂ dem Verdichter für die Überführung des CO2 in den superkritischen Zustand zugeführt und anschliessend via der Zuführleitung (17a) für scCO2, in den Aquifer (0) zurückgeführt werden kann.

10. Die Geothermieanlage nach einem der Ansprüche 7 bis 9, wobei dem Separator (11) nachgeschaltet eine Vorrichtung zur Erzeugung von Strom angeordnet ist, insbesondere eine ORC-Verstromungsanlage (15, 16).

11. Die Geothermieanlage nach einem der Ansprüche 7 bis 10, wobei mindestens einer der Wärmetauscher zur Nutzung der thermischen Energie des Thermalwassers (12, 13, 14) und/oder ein im Abgasstrom angeordneter Wärmetauscher Teil einer Entsalzungsanlage sind, insbesondere einer Entsalzungsanlage, die nach dem LTTD-Verfahren betrieben wird.

12. Die Geothermieanlage nach einem der Ansprüche 7 bis 11, wobei der Separationsvorrichtung (11) eine Entspannungsvorrichtung vorgeschaltet ist, in welcher ein im Aquiferfluid (A) herrschender Druck partiell in Strom umgewandelt wird.

## Claims

1. A method for utilizing the internal energy of an aquifer fluid (A) comprising geothermal thermal water (T) mixed with dissolved combustible gas (G) and optionally petroleum (E) in a closed circuit, **characterized by** the steps of
- extraction of the aquifer fluid (A) from an aquifer (0) through more than one extraction well (100), each extraction well (100) having an extraction device (10) in the area of the extraction well (100) by means of which the aquifer fluid (A) is extracted, and each extraction device (10) comprising an extraction pump,
- separation of the gas (G) by degassing the aquifer fluid (A) in a gas separation device (11), whereby degassed thermal water (T) is produced,
- optionally, separating petroleum (E), whereby degassed and de-oiled thermal water (T) is produced,
- utilizing the thermal energy of the degassed thermal water (T) in at least one thermal energy utilization device, such as a heat exchanger (12, 13, 14) and/or an ORC power plant (15, 16), and
- carrying out a combustion process of the separated gas (G) and optionally the separated petroleum (E) in at least one combustion device (24, 24a), in particular a gas engine and optionally a diesel engine, and utilizing the internal energy of the gas (G) and optionally the petroleum (E) by operating at least one generator (25, 25a),
- removing undesirable substances from the exhaust gases of the combustion process by means of an exhaust gas purification device for separating CO2 from the cooled exhaust gases, comprising an amine scrubber (30) followed by a device for decomposing ammonium carbonate (31) which is heated by means of a heating medium which has been heated by the exhaust gases in a heat exchanger (28), and recirculating the amine to the amine scrubber (30), and
- reinjecting the CO2 and the cooled thermal water (T) into the aquifer (0) by means of at least one reinjection device (40) through at least one reinjection well (400) spaced from the extraction wells (100), and
* wherein, when the thermal water has been cooled to below 35°C or lower, the CO2 is compressed and injected into the return line (17) for the thermal water and reinjected together therewith into the aquifer (0) via the recirculation device, or
* wherein, if the thermal water after the last heat exchanger (12, 13, 14) still has a temperature of 35°C or more, the CO2 is compressed to the super-critical state (scCO2) and recirculated separately from the thermal water into the aquifer to depths at which the pressure in the aquifer approximately corresponds to the pressure of the scCO2 and wherein, after dissolving the scCO2 in the thermal water, the solution is optionally fed even deeper into the aquifer,
- wherein the at least one combustion device (24, 24a) is preceded by a mixing device (23) for mixing the gas and optionally petroleum (E) with combustion air, wherein the mixing ratio in the mixing device (23) is controlled by means of a lambda probe arranged in the exhaust gas flow,
- wherein the gas-air mixture or the petroleum-air mixture or the petroleum-natural gas mixture is preheated in a heat exchanger (26) before being fed into the at least one combustion device (24, 24a), and
- wherein exhaust gas purification takes place in an exhaust gas purification device (27), in particular a catalytic converter, connected downstream of the combustion device (24).

2. The process for utilizing the internal energy of an aquifer fluid (A) according to claim 1, wherein the at least one heat exchanger (12, 13, 14) is used for heating at least one circulated heating medium and/or for carrying out a desalination process, in particular according to the LTTD process.

3. The method for utilizing the internal energy of an aquifer fluid (A) according to any of the preceding claims, wherein each reinjection well is provided with a reinjection device (40).

4. The method for utilizing the internal energy of an aquifer fluid (A) according to any one of the preceding claims, wherein the extraction of aquifer fluid (A) is performed simultaneously via a plurality of extraction wells (100) and the reinjection is performed simultaneously via a plurality of reinjection wells (400), each well being provided with an extraction and reinjection device (10, 40), respectively.

5. The method for utilizing the internal energy of an aquifer fluid (A) according to any one of the preceding claims, wherein the CO2 is introduced into the cooled thermal water (T), in particular by means of a mixer device (34), such as a trickle washer, and subsequently reinjection of the CO2-added thermal water into the aquifer (0) takes place, wherein the formation of gas bubbles during the reinjection of the thermal water mixed with CO2 is avoided by selecting a recirculation pressure (pr) on the carbon dioxide and a recirculation temperature Tr such that the CO2 dissolves completely in the thermal water.

6. The method for utilizing the internal energy of an aquifer fluid (A) according to any one of the preceding claims, wherein the aquifer fluid (A), prior to its introduction into a separation device (11), is expanded in an expansion device upstream of the separation device (11) which converts pressure into current.

7. A geothermal plant for utilizing the internal energy of geothermal thermal water (T) mixed with dissolved combustible gas (G) and optionally petroleum (E) from an aquifer (0) in a closed circuit, comprising
- a plurality of extraction wells (100), wherein each extraction well (100) has an extraction device (10) for aquifer fluid (A) in the region of the respective extraction well (100) for extracting the aquifer fluid (A), and wherein each extraction device (10) comprises an extraction pump,
- a gas separation device (11) for separating the aquifer fluid (A) into thermal water (T) and gas (G),
- optionally, a separation device (11a) for separating petroleum from the thermal water (T), which may already be degassed,
- at least one device for utilizing thermal energy, such as at least one heat exchanger (12, 13, 14), for utilizing the thermal energy contained in the thermal water (T) for heating circulated heating medium and/or at least one device for utilizing thermal energy for generating electricity, in particular an ORC electricity generation plant (15, 16) and/or for operating a desalination plant, in particular a desalination plant operated according to the LTTD process,
- a combustion device (24) for separated gas, in particular a gas engine, with at least one generator (25) coupled thereto for generating electric power,
- optionally a combustion device (24a) for separated petroleum, in particular a diesel engine, with at least one generator (25a) coupled thereto for the generation of electric power,
- at least one device for utilizing the thermal energy in the exhaust gas stream (28, 29) of the combustion device (24), at least one of which is a heat exchanger,
- a gas scrubber (30) arranged in the exhaust gas stream of the combustion device (24) downstream of the at least one device for utilizing the thermal energy thereof (28, 29) for separating CO2, the gas scrubber being an amine scrubber followed by a device for decomposing ammonium carbonate (31) which is heated by means of a heating medium heated by the exhaust gases in the heat exchanger (28), and recirculating the amine to the amine scrubber (30)
- a feed line for the CO2 obtained after gas scrubbing
* into a compressor and subsequently via a mixer device, preferably a trickle scrubber (34), into a return line (17) for the thermal water discharged from the at least one heat exchanger (14) or an ORC power plant or a desalination plant, if the thermal water has been cooled down to below 35°C or lower, or
* into a compressor for bringing the CO2 into the supercritical state and then into a supply line (17a) for scCO2 which is separate from a supply line (17b) for thermal water (T) and which both lead into the aquifer (0) when the thermal water after the last heat exchanger (12, 13, 14) still has a temperature of 35°C or more, wherein the supply line for scCO2 (17a) and the supply line for cooled thermal water (17b) are such that the introduction of the scCO2 into the cooled thermal water is feasible at a pressure in the aquifer corresponding to the pressure of the scCO2,
- at least one reinjection device (40) for reinjecting the carbon dioxide and the cooled thermal water through at least one reinjection well (400) into the aquifer (0), said re-injection well (400) being arranged at a distance from the extraction wells (100), and
- a mixing device (23) upstream of the at least one combustion device (24, 24a) for mixing the gas or the gas and the petroleum with combustion air, and
- an exhaust gas purification device (27), such as a catalyst, connected downstream of the combustion device.

8. The geothermal plant according to claim 7, wherein the combustion device (24) is designed as a gas engine and the exhaust gas purification device (27) comprises a catalytic converter and a lambda probe, and wherein a mixing device (23) is connected upstream of the combustion device (24) and regulates the admixture of oxygen as a function of the measurement of the lambda probe, so that a controlled combustion is facilitated.

9. The geothermal plant according to claim 7 or 8, which has a feed line for additional carbon dioxide from an anthropogenic source in such a way that it can be fed to the exhaust gas, preferably upstream of the gas scrubber (30), such that it, together with the CO2 originating from the exhaust gas, is mixed in the cooled thermal water by means of a mixer device, in particular a trickle scrubber (34), and returned to the aquifer (0) by means of the return device (40), or such that it can be fed together with the CO2 originating from the exhaust gas to the compressor for the conversion of the CO2 into the supercritical state and subsequently returned to the aquifer (0) via the feed line (17a) for scCO2.

10. The geothermal plant according to any one of claims 7 to 9, wherein a device for generating electricity is arranged downstream of the separator (11), in particular an ORC electricity generation plant (15, 16).

11. The geothermal plant according to any one of claims 7 to 10, wherein at least one of the heat exchangers for utilizing the thermal energy of the thermal water (12, 13, 14) and/or a heat exchanger arranged in the exhaust gas flow are part of a desalination plant, in particular a desalination plant which is operated according to the LTTD process.

12. The geothermal plant according to any one of claims 7 to 11, wherein the separation device (11) is preceded by an expansion device in which a pressure prevailing in the aquifer fluid (A) is partially converted into electricity.

## Revendications

1. Un procédé d'utilisation de l'énergie interne d'un fluide aquifère (A) comprenant de l'eau thermale géothermique (T) mélangée à du gaz combustible dissous (G) et éventuellement à du pétrole (E) dans un circuit fermé,
**caractérisé par** les étapes suivantes:
- prélèvement du fluide aquifère (A) d'un aquifère (0) au moyen d'au moins puits de prélèvement (100), chaque puits de prélèvement (100) ayant un dispositif de prélèvement (10) dans la zone du puits de prélèvement (100) au moyen duquel le fluide aquifère (A) est prélevé, et chaque dispositif de prélèvement (10) comprenant une pompe de prélèvement,
- séparation du gaz (G) par dégazage du fluide aquifère (A) dans un dispositif de séparation des gaz (11) aboutissant à de l'eau thermale dégazée (T),
- optionnellement, séparation du pétrole (E), aboutissant à de l'eau thermale dégazée et déshuilée (T),
- utilisation de l'énergie thermique de l'eau thermique dégazée (T) dans au moins un dispositif d'utilisation de l'énergie thermique, tel qu'un échangeur de chaleur (12, 13, 14) et/ou une centrale électrique ORC (15, 16), et
- effectuer un processus de combustion du gaz séparé (G) et optionnellement du pétrole séparé (E) dans au moins un dispositif de combustion (24, 24a), en particulier un moteur à gaz et optionnellement un moteur diesel, et utilisation de l'énergie interne du gaz (G) et optionnellement du pétrole (E) en actionnant au moins un générateur (25, 25a),
- élimination des substances indésirables des gaz d'échappement du processus de combustion au moyen d'un dispositif d'épuration des gaz d'échappement destiné à séparer le CO₂ des gaz d'échappement refroidis, comprenant un épurateur aux amines (30) suivi d'un dispositif de décomposition du carbonate d'ammonium (31) qui est chauffé au moyen d'un fluide chauffant, qui a été chauffé par les gaz d'échappement dans l'échangeur de chaleur (28), et recirculation des amines vers l'épurateur d'amines (30), et
- réinjection du CO₂ et de l'eau thermique refroidie (T) dans l'aquifère (0) au moyen d'au moins un dispositif de recirculation (40) à travers au moins un puits de réinjection (400) espacé des puits de prélèvement (100), et
* dans lequel, lorsque l'eau thermale a été refroidie à une température inférieure à 35°C ou moins, le CO₂ est comprimé et injecté dans la conduite de retour (17) de l'eau thermale et réinjecté avec celle-ci dans l'aquifère (0) au moyen du dispositif de recirculation, ou
* dans lequel, si l'eau thermale après le dernier échangeur de chaleur (12, 13, 14) a encore une température de 35°C ou plus, le CO₂ est comprimé à l'état supercritique (scCOz) et recirculé séparément de l'eau thermique dans l'aquifère à des profondeurs auxquelles la pression dans l'aquifère correspond approximativement à la pression du scCO₂ et dans lequel, après avoir dissous le scCO₂ dans l'eau thermale, la solution est éventuellement introduite encore plus profondément dans l'aquifère,
- dans lequel ledit au moins un dispositif de combustion (24, 24a) est précédé d'un dispositif de mélange (23) pour mélanger le gaz et éventuellement le pétrole (E) avec l'air de combustion, le rapport de mélange dans le dispositif de mélange (23) étant contrôlé au moyen d'une sonde lambda disposée dans le flux de gaz d'échappement,
- dans lequel le mélange gaz-air ou le mélange pétrole-air ou le mélange pétrole-gaz naturel est préchauffé dans un échangeur de chaleur (26) avant d'être introduit dans l'au moins un dispositif de combustion (24, 24a), et
- l'épuration des gaz d'échappement s'effectue dans un dispositif d'épuration des gaz d'échappement (27), en particulier un convertisseur catalytique, connecté en aval du dispositif de combustion (24).

2. Le procédé d'utilisation de l'énergie interne d'un fluide aquifère (A) selon la revendication 1, dans lequel le au moins un échangeur de chaleur (12, 13, 14) est utilisé pour chauffer au moins un fluide de chauffage en circulation et/ou pour mettre en oeuvre un procédé de dessalement, notamment selon le procédé LTTD.

3. Le procédé d'utilisation de l'énergie interne d'un fluide aquifère (A) selon l'une quelconque des revendications précédentes, dans lequel chaque puits de réinjection est équipé d'un dispositif de réinjection (40).

4. Le procédé d'utilisation de l'énergie interne d'un fluide aquifère (A) selon l'une quelconque des revendications précédentes, dans lequel le prélèvement du fluide aquifère (A) s'effectue simultanément à travers une pluralité de puits de prélèvement (100) et la réinjection s'effectuée simultanément à travers une pluralité de puits de réinjection (400), chaque puits étant équipé d'un dispositif de prélèvement et de réinjection (10, 40), respectivement.

5. Le procédé d'utilisation de l'énergie interne d'un fluide aquifère (A) selon l'une quelconque des revendications précédentes, dans lequel le CO₂ est introduit dans l'eau thermale refroidie (T), notamment au moyen d'un dispositif mélangeur (34), tel qu'un laveur à ruissellement, et à la suite l'eau thermale ayant du CO₂ rajouté est réinjectée dans l'aquifère (0), où la formation de bulles de gaz lors de la réinjection de l'eau thermale mélangée au CO₂ est évitée en sélectionnant une pression de recirculation (pr) sur le dioxyde de carbone et une température de recirculation Tr telle que le CO₂ se dissout complètement dans l'eau thermale.

6. Le procédé d'utilisation de l'énergie interne d'un fluide aquifère (A) selon l'une quelconque des revendications précédentes, dans lequel le fluide aquifère (A), avant d'être introduit dans un dispositif de séparation (11), est détendu dans un dispositif d'expansion en amont du dispositif de séparation (11) qui convertit la pression en courant.

7. Une centrale géothermique pour l'utilisation de l'énergie interne de l'eau thermale géothermique (T) mélangée à du gaz combustible dissous (G) et optionnellement à du pétrole (E) provenant d'un aquifère (0) dans un circuit fermé, comprenant
- une pluralité de puits de prélèvement (100), chaque puits de prélèvement (100) ayant un dispositif de prélèvement (10) du fluide aquifère (A) dans la zone respective du puits de prélèvement (100) pour prélever le fluide aquifère (A), et chaque dispositif de prélèvement (10) comprenant une pompe de prélèvement,
- un dispositif de séparation des gaz (11) pour séparer le fluide aquifère (A) en eau thermale (T) et en gaz (G),
- optionnellement, un dispositif de séparation (11a) pour séparer le pétrole de l'eau thermale (T), qui peut déjà être dégazée,
- au moins un dispositif d'utilisation de l'énergie thermique, tel qu'au moins un échangeur de chaleur (12, 13, 14), pour utiliser l'énergie thermique contenue dans l'eau thermale (T) pour chauffer le fluide de chauffage circulant et/ou au moins un dispositif d'utilisation de l'énergie thermique afin de produire de l'électricité, en particulier une centrale électrique ORC (15, 16) et/ou pour faire fonctionner une installation de dessalement, en particulier une installation pour mettre en oeuvre un procédé de dessalement LTTD,
- un dispositif de combustion (24) pour le gaz séparé, en particulier un moteur à gaz, auquel est couplé au moins un générateur (25) pour la production d'énergie électrique,
- optionnellement, un dispositif de combustion (24a) pour le pétrole séparé, en particulier un moteur diesel, auquel est couplé au moins un générateur (25a) pour la production d'énergie électrique,
- au moins un dispositif d'utilisation de l'énergie thermique dans le flux de gaz d'échappement (28, 29) du dispositif de combustion (24), dont l'un au moins est un échangeur de chaleur,
- un épurateur de gaz (30) placé dans le flux de gaz d'échappement du dispositif de combustion (24) en aval de l'au moins un dispositif d'utilisation de l'énergie thermique de ce dernier (28, 29) pour la séparation du CO₂, ledit épurateur de gaz étant un épurateur aux amines suivi d'un dispositif de décomposition du carbonate d'ammonium (31), qui est chauffé au moyen d'un fluide chauffant chauffé par les gaz d'échappement dans l'échangeur de chaleur (28), et la recirculation des amines vers l'épurateur aux amines (30),
- une conduite d'alimentation pour le CO₂ obtenu après l'épuration des gaz;
* dans un compresseur et ensuite via un dispositif mélangeur, de préférence un laveur à ruissellement (34), dans une conduite de retour (17) pour l'eau thermale évacuée de l'un au moins d'un échangeur de chaleur (14) ou une centrale électrique ORC ou une installation de dessalement, si l'eau thermique a été refroidie à une température inférieure à 35°C ou moins, ou
* dans un compresseur pour amener le CO₂ à l'état supercritique, et ensuite dans une conduite d'alimentation (17a) en scCO₂ qui est séparée d'une conduite d'alimentation (17b) en eau thermale (T) et qui aboutissent toutes deux dans l'aquifère (0) lorsqu' après le dernier échangeur de chaleur (12, 13, 14) l'eau thermale a encore une température de 35°C ou plus, où la conduite d'alimentation en scCO₂ (17a) et la conduite d'alimentation en eau thermale refroidie (17b) sont telles que l'introduction du scCO₂ dans l'eau thermique refroidie est possible à une pression dans l'aquifère correspondant à la pression du scCO₂,
- au moins un dispositif de recirculation (40) pour réinjecter le dioxyde de carbone et l'eau thermale refroidie à travers au moins un puits de réinjection (400) dans l'aquifère (0), ledit puits de réinjection (400) étant disposé à distance des puits de prélèvement (100), et
- un dispositif de mélange (23) en amont dudit au moins un dispositif de combustion (24, 24a) pour mélanger le gaz ou le gaz et le pétrole avec l'air de combustion, et
- un dispositif d'épuration des gaz d'échappement (27), tel qu'un catalyseur, connecté en aval du dispositif de combustion.

8. La centrale géothermique selon la revendication 7, dans laquelle le dispositif de combustion (24) est conçu comme un moteur à gaz et le dispositif d'épuration des gaz d'échappement (27) comprend un convertisseur catalytique et une sonde lambda, et dans laquelle un dispositif de mélange (23) est connecté en amont du dispositif de combustion (24) et régule l'apport d'oxygène en fonction de la mesure de la sonde lambda, ce qui facilite une combustion contrôlée.

9. La centrale géothermique selon la revendication 7 ou 8, qui dispose d'une conduite d'alimentation pour le dioxyde de carbone supplémentaire provenant d'une source anthropogénique, de manière à ce qu'il puisse être introduit dans les gaz d'échappement, de préférence en amont de l'épurateur de gaz (30), de sorte qu'il soit mélangé, avec le CO₂ provenant des gaz d'échappement, à l'eau thermique refroidie au moyen d'un dispositif mélangeur, en particulier un laveur à ruissellement (34), et renvoyé dans l'aquifère (0) au moyen du dispositif de réinjection (40), ou tel qu'il puisse être fourni avec le CO₂ provenant des gaz d'échappement vers le compresseur pour la conversion du CO₂ à l'état supercritique et renvoyé ensuite dans l'aquifère (0) via la conduite d'alimentation (17a) pour le scCO₂.

10. La centrale géothermique selon l'une quelconque des revendications 7 à 9, dans laquelle un dispositif de production d'électricité est disposé en aval du séparateur (11), en particulier une central électrique ORC (15, 16).

11. La centrale géothermique selon une quelconque des revendications 7 à 10, dans laquelle au moins un des échangeurs de chaleur pour l'utilisation de l'énergie thermique de l'eau thermale (12, 13, 14) et/ou un échangeur de chaleur disposé dans le flux de gaz d'échappement font partie d'une installation de dessalement, en particulier une installation pour mettre en oeuvre un procédé de dessalement LTTD.

12. La centrale géothermique selon une quelconque des revendications 7 à 11, dans laquelle le dispositif de séparation (11) est précédé d'un dispositif d'expansion dans lequel la pression régnant dans le fluide aquifère (A) est partiellement convertie en électricité.
